(19) Europäisches Patentamt
European Patent Office
Office européen des brevets

(11) **EP 4 708 438 A1**

(12) **EUROPEAN PATENT APPLICATION**
published in accordance with Art. 153(4) EPC

(43) Date of publication:
**11.03.2026 Bulletin 2026/11**

(21) Application number: **24815825.5**

(22) Date of filing: **27.05.2024**

(51) International Patent Classification (IPC):
***H01M 10/0567*** *(2010.01)* ***H01M 10/0565*** *(2010.01)*
***H01M 10/0562*** *(2010.01)* ***H01M 10/052*** *(2010.01)*
***H01M 10/0569*** *(2010.01)* ***H01M 10/42*** *(2006.01)*

(52) Cooperative Patent Classification (CPC):
Y02E 60/10

(86) International application number:
**PCT/KR2024/007150**

(87) International publication number:
**WO 2024/248449 (05.12.2024 Gazette 2024/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.05.2023 KR 20230068397**
**24.05.2024 KR 20240067989**

(71) Applicant: **SK On Co., Ltd.**
**Seoul 03161 (KR)**

(72) Inventors:
- **LEE, Han Sol**
  **Daejeon 34124 (KR)**
- **GO, Hyeon Jin**
  **Daejeon 34124 (KR)**
- **BAN, Hee Jung**
  **Daejeon 34124 (KR)**
- **RYU, Hye Min**
  **Daejeon 34124 (KR)**
- **PARK, Myung Soo**
  **Daejeon 34124 (KR)**
- **CHOI, Jae Hoon**
  **Daejeon 34124 (KR)**
- **PARK, Doe Hee**
  **Daejeon 34124 (KR)**

(74) Representative: **Prüfer & Partner mbB**
**Patentanwälte · Rechtsanwälte**
**Sohnckestraße 12**
**81479 München (DE)**

(54) **MONOMER FOR ELECTROLYTE, ELECTROLYTE FOR SECONDARY BATTERY COMPRISING SAME, MANUFACTURING METHOD THEREOF, AND LITHIUM SECONDARY BATTERY COMPRISING SAME**

(57) A monomer for an electrolyte according to embodiments of the present disclosure may include a first monomer represented by Formula 1 and a second monomer represented by Formula 2. A lithium secondary battery according to embodiments of the present disclosure may include a cathode, an anode, and an electrolyte layer, wherein the electrolyte layer may include a polymer derived from a compound represented by Formula 1.

[FIG. 1]

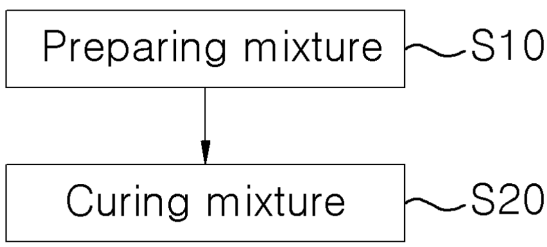


EP 4 708 438 A1

## Description

[Technical Field]

The present disclosure relates to a monomer for an electrolyte, an electrolyte for a secondary battery including the same, a method for manufacturing the electrolyte, and a lithium secondary battery including the same.

[Background Art]

A secondary battery is a battery that can be repeatedly charged and discharged. With the rapid progress of information and communication technology and display industries, the secondary battery has been widely applied to various portable electronic telecommunication devices such as a camcorder, a mobile phone, a laptop computer, etc. as their power sources. Recently, a battery pack including the secondary battery has also been developed and applied to eco-friendly automobiles such as an electric vehicle, a hybrid vehicle, etc., as their power sources.

Examples of the secondary battery may include a lithium secondary battery, a nickelcadmium battery, a nickel-hydrogen battery and the like. Among them, the lithium secondary battery has a high operating voltage and a high energy density per unit weight, making it advantageous in terms of charging speed and lightweight design. In this regard, the lithium secondary battery has been actively developed and applied to various industrial fields.

Since commercially available lithium secondary batteries have mainly employed liquid electrolytes to date, there are safety issues such as leakage, ignition, and explosion due to sudden environmental changes, including temperature fluctuations, external impacts and the like. To address these problems, research has been conducted to solidify the electrolyte, thereby enhancing stability and increasing energy density.

All-solid-state batteries may include solid-state electrolytes such as gel polymers, oxides, sulfides, or composite polymers as the electrolyte. Accordingly, stability against ignition and explosion caused by external impacts or external environmental fluctuations may be enhanced.

However, among solid-state electrolytes, gel polymer electrolytes or composite polymer electrolytes may have a greater risk of ignition than oxide- or sulfide-based electrolytes. Therefore, there is a need to improve the stability against ignition of gel polymer electrolytes or composite polymer electrolytes.

[Summary of Invention]

[Problems to be Solved by Invention]

An object of the present disclosure is to provide a monomer for an electrolyte with improved flame retardancy.

Another object of the present disclosure is to provide an electrolyte for a secondary battery with improved flame retardancy and ionic conductivity.

Still another object of the present disclosure is to provide a method for manufacturing an electrolyte for a secondary battery with improved flame retardancy and ionic conductivity.

Yet another object of the present disclosure is to provide a lithium secondary battery with improved stability and electrochemical characteristics.

[Means for Solving Problems]

A monomer for an electrolyte according to exemplary embodiments may include: a first monomer represented by Formula 1; and a second monomer represented by Formula 2:

[Formula 1]

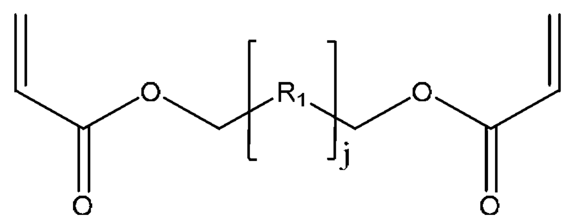

In Formula 1, $R_1$ is a substituted or unsubstituted C2 to C12 alkylene group, or a substituted or unsubstituted C2 to C10 oxyalkylene group, and j is an integer from 1 to 5.

[Formula 2]

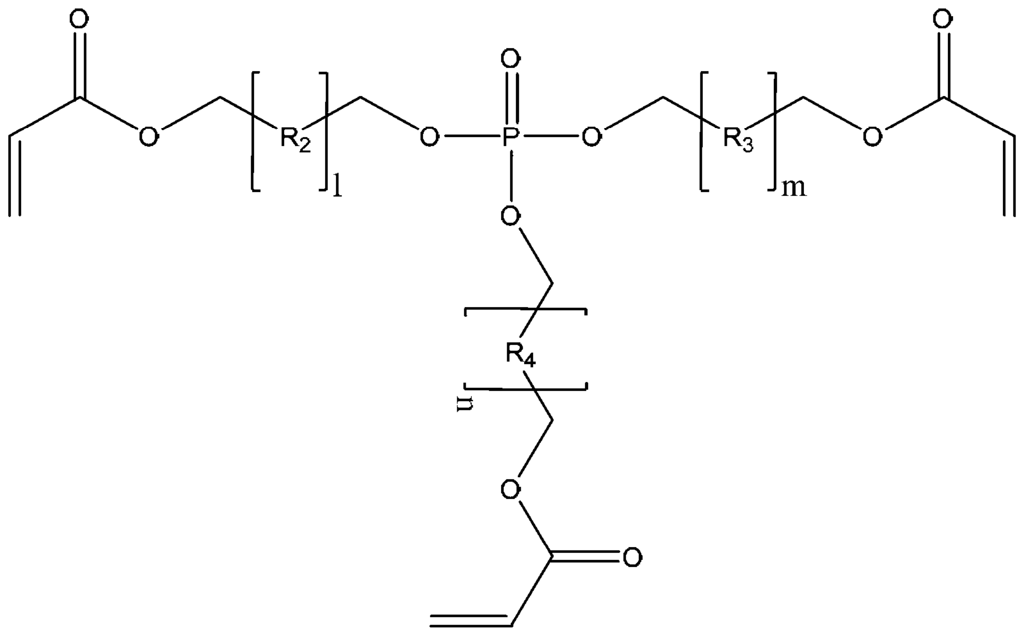

In Formula 2, $R_2$, $R_3$ and $R_4$ are each independently a substituted or unsubstituted C2 to C10 alkylene group, or a substituted or unsubstituted C2 to C10 alkoxy group, and 1, m and n are each independently an integer from 0 to 5.

In some embodiments, the ratio of the content of the second monomer to the content of the first monomer may be 0.5 to 2 based on weight.

In some embodiments, in Formula 1, $R_1$ may be a fluorine-substituted C2 to C10 alkylene group, or a fluorine-substituted C2 to C10 oxyalkylene group, and in Formula 2, 1, m and n may each independently be an integer from 0 to 3.

In some embodiments, in Formula 2, $R_2$, $R_3$ and $R_4$ may be the same, and l, m and n may be the same integers.

In some embodiments, the first monomer may include at least one of a monomer represented by Formula 1-1 and a monomer represented by Formula 1-2:

[Formula 1-1]

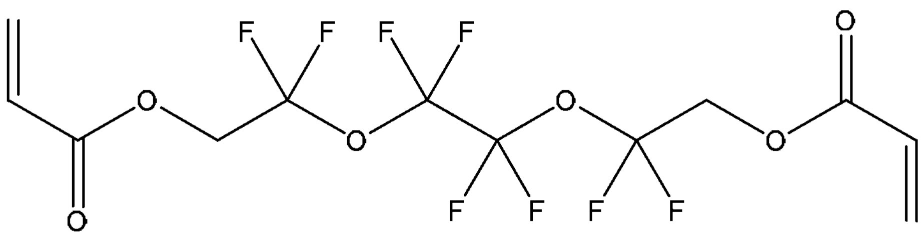

[Formula 1-2]

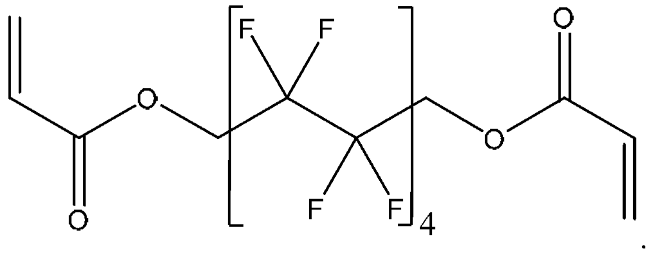

In some embodiments, the second monomer may include at least one of a monomer represented by Formula 2-1 to a monomer represented by Formula 2-3:

[Formula 2-1]

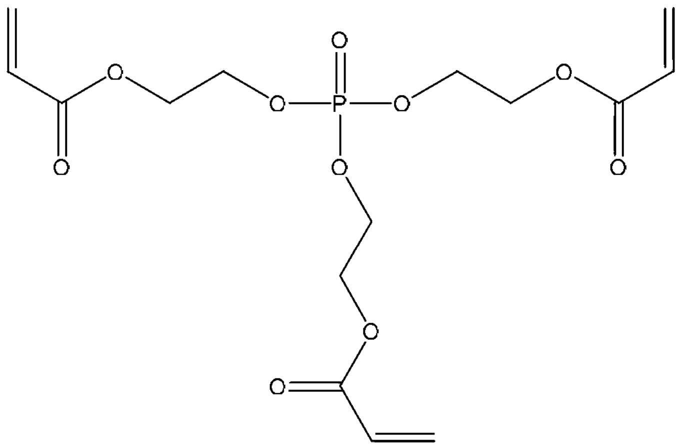

[Formula 2-2]

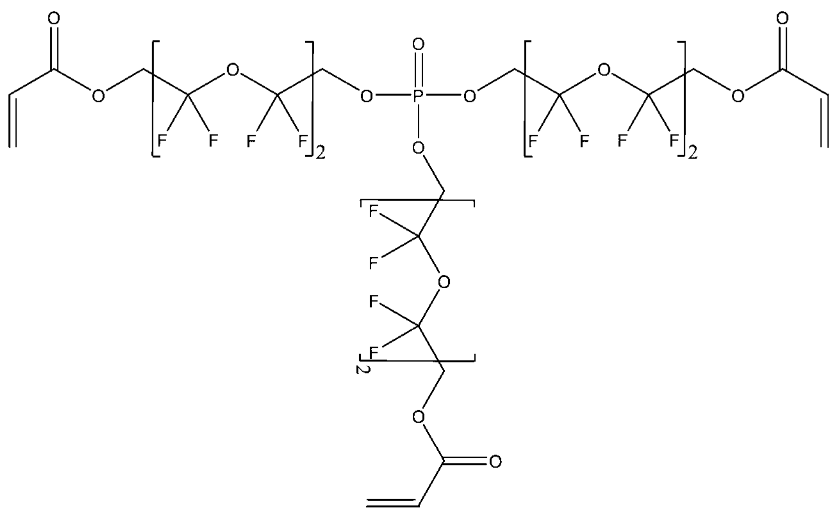

[Formula 2-3]

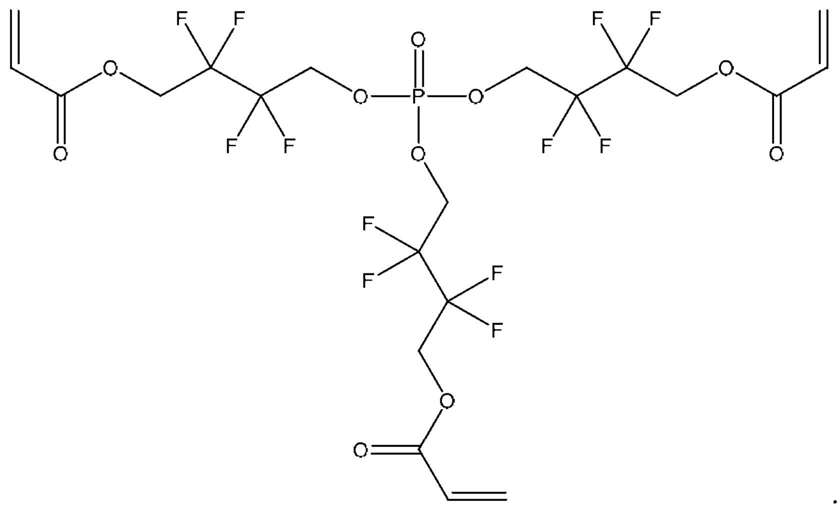

.

An electrolyte for a secondary battery according to exemplary embodiments may include: a flame retardant compound including a polymer derived from the above-described monomer for an electrolyte; and a lithium salt.

In some embodiments, the electrolyte for a secondary battery may further include a composite electrolyte including an organic polymer and an inorganic electrolyte, wherein the composite electrolyte may have a film form.

In some embodiments, the inorganic electrolyte may include an oxide-based solid electrolyte.

In some embodiments, the content of the flame retardant compound may be 3% by weight to 30% by weight based on the total weight of the electrolyte for the secondary battery.

A lithium secondary battery according to exemplary embodiments may include: a cathode; an anode disposed to face the cathode; and an electrolyte layer which is disposed between the cathode and the anode, and includes the above-described electrolyte for a secondary battery.

A method for manufacturing an electrolyte for a secondary battery according to exemplary embodiments may include: preparing a mixture including the above-described monomer for an electrolyte and an electrolyte solution; and curing the mixture.

In some embodiments, the mixture may further include an organic polymer and an inorganic electrolyte.

In some embodiments, the content of the monomer for an electrolyte may be 3% by weight to 30% by weight based on the total weight of the mixture.

In some embodiments, the electrolyte solution may include an ether-based solvent containing fluorine (F).

In some embodiments, the content of the ether-based electrolyte solution containing fluorine (F) may be 10% by weight to 60% by weight based on the total weight of the electrolyte solution.

In some embodiments, the mixture may further include a thermal initiator, and the step of curing the mixture may include heat-treating the mixture.

In some embodiments, the mixture may further include a photoinitiator, and the step of curing the mixture may include irradiating the mixture with light.

[Advantageous effects]

According to exemplary embodiments of the present disclosure, the monomer for an electrolyte may be used in combination with a plurality of monomer for an electrolytes having self-extinguishing properties. The flame stability of an electrolyte including the monomer for an electrolyte may be improved.

According to exemplary embodiments of the present disclosure, the monomer for an electrolyte may be included in an electrolyte for a secondary battery within a predetermined content range. The stability and electrical characteristics of the electrolyte may be improved simultaneously.

A lithium secondary battery according to exemplary embodiments of the present disclosure may include the electrolyte for a secondary battery. The safety at room temperature and high temperature, and ionic conductivity may be improved, thereby enhancing the cycle life characteristics and electrical characteristics.

[Brief Description of Drawings]

FIG. 1 is a schematic flowchart for describing the processes of a method for manufacturing an electrolyte for a secondary battery according to exemplary embodiments.

FIG. 2 is a schematic cross-sectional view illustrating an electrode cell according to exemplary embodiments.

FIG. 3 is a schematic view illustrating the structure of an electrolyte layer for a secondary battery according to exemplary embodiments.

FIG. 4 is a graph illustrating DSC evaluations of lithium secondary batteries manufactured according to exemplary embodiments and comparative examples.

[Mode for Carrying out Invention]

According to exemplary embodiments, a monomer for an electrolyte, a method for manufacturing an electrolyte for a secondary battery including the same, and an electrolyte for a secondary battery prepared by the method are provided. In addition, a lithium secondary battery including an electrolyte layer including the electrolyte for a secondary battery is also provided.

Hereinafter, embodiments of the present disclosure will be described in detail with reference to the accompanying drawings. However, these are merely illustrative and the present disclosure is not limited to the specific embodiments described as examples.

Unless otherwise defined herein, when a portion such as a layer, film, thin film, region, or plate, etc. is present "on" or "above" another portion, it may include not only the case where the portion is present "directly on" the other portion, but also the case where another portion is present between them.

If there is an isomer of a compound represented by a formula used herein, the compound represented by the corresponding formula refers to the representative formula including such isomers.

The term "substituted" as used herein may refer to a state in which at least one of the hydrogen atoms in a compound is substituted with a substituent, such as a halogen group, a hydroxyl group, a heteroalkyl group, a heterocycloalkyl group, a heteroaryl group, an amine group, a nitrile group, a nitro group, a silyl group, etc.

The term "unsubstituted" as used herein may refer to a state in which all of the hydrogen atoms of a compound are not substituted, i.e., remain unsubstituted.

In the term "substituted or unsubstituted Y group of $C_a$-$C_b$" as used herein, $C_a$-$C_b$ refers to the number of carbon atoms in the Y group in its unsubstituted state, and does not include the number of carbon atoms in any substituent.

The term "oxyalkylene group" as used herein encompasses compounds in which any one of the methylene groups ($-CH_2-$) of a straight-chain or branched-chain saturated hydrocarbon is substituted with an oxygen atom. For example, an oxyalkylene group may be represented as "-Ra-O-" or "-Ra-O-Rb-" (where Ra and Rb are alkylene groups).

The term "flame retardancy" as used herein refers to the ability to prevent or suppress combustion, wherein a sample burns while in contact with a flame (ignition source) but selfextinguishes once the flame is removed. Flame retardancy may be evaluated based on the time required for the flame to be extinguished after removing a torch used to supply a flame of a certain heat amount to the sample for 1 second or more. It may be evaluated that shorter extinguishing times indicate better flame retardancy.

Specifically, the term "flame retardant compound" as used herein may be a compound which, when glass fiber cut to φ16 is impregnated with the flame retardant compound and cured as needed, and then ignited by supplying a flame of a constant heat amount for 1 second or more using a torch and the torch is removed, exhibits an extinguishing time (s/g) relative to the mass of the sample of 60 s/g or less, specifically 55 s/g or less, and more specifically 53 s/g or less.

The monomer for an electrolyte ("electrolyte monomer") according to exemplary embodiments may include a first monomer represented by Formula 1 and a second monomer represented by Formula 2.

[Formula 1]

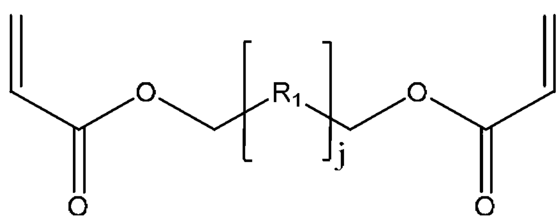

In Formula 1, $R_1$ is a substituted or unsubstituted C2 to C12, C2 to C10, or C2 to C8 alkylene group, or a substituted or unsubstituted C2 to C10, C2 to C8, or C2 to C6 oxyalkylene group.

In Formula 1, j may be an integer from 1 to 5, 1 to 4, or 1 to 3.

The compound represented by Formula 1 may include equivalents thereof. For example, at least one hydrogen atom bonded to a carbon atom in Formula 1 may be further substituted with a substituent within an equivalent range, and for example, at least one hydrogen atom bonded to a carbon atom in Formula 1 may be further substituted with deuterium or an alkyl group having 1 to 5 carbon atoms.

[Formula 2]

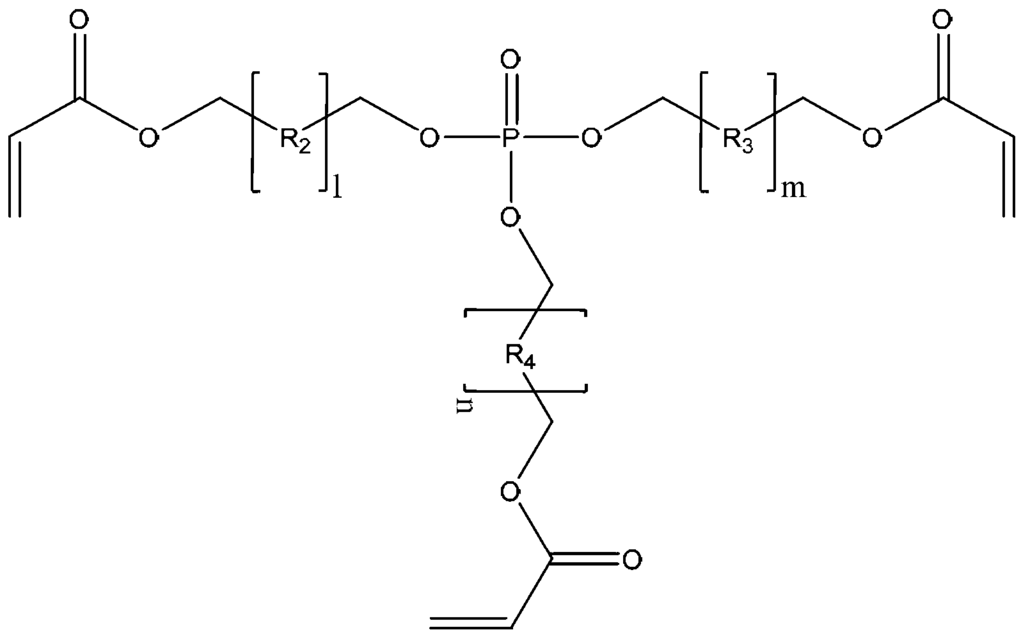

In Formula 2, $R_2$, $R_3$ and $R_4$ may each independently be a substituted or unsubstituted C2 to C10, C2 to C8, or C2 to C6 alkylene group, or a substituted or unsubstituted C2 to C10, C2 to C8, or C2 to C6 oxyalkylene group.

In Formula 2, 1, m and n may each independently be an integer from 0 to 5, 0 to 4, or 0 to 3.

The compound represented by Formula 2 may include equivalents thereof. For example, at least one hydrogen atom bonded to a carbon atom in Formula 2 may be further substituted with a substituent within an equivalent range, and for example, at least one hydrogen atom bonded to a carbon atom in Formula 2 may be further substituted with deuterium or an alkyl group having 1 to 5 carbon atoms.

For example, the oxymethylene group may have a structure in which one of the carbon atoms of an ethylene group is substituted with an oxygen atom. Examples of oxyalkylene groups may include oxymethylene, oxyethylene, oxypropylene, oxybutylene, oxypentylene, dimethyloxypropylene, ethyl-oxypropylene and the like.

The second monomer may be a phosphorus compound including a phosphate group. The phosphorus compound may undergo thermal decomposition upon combustion to produce polymetaphosphate. In addition, as the polymetaphosphate is produced, a carbon compound (e.g., charcoal) may be generated through dehydration and esterification and dehydrogenation reactions of the polymetaphosphate. The polymetaphosphate may form a protective layer, and the carbon compound may form a carbon film. The phosphorus compound may block oxygen and heat through the protective layer and carbon film formed upon combustion. Therefore, the monomer represented by Formula 2 may have high self-extinguishing properties. Accordingly, the flame retardancy of an electrolyte containing the monomer represented by Formula 2 may be improved.

The first monomer may include two acrylate groups, and the second monomer may include three acrylate groups. For example, the molecular terminals of the first monomer and the second monomer may both include acrylate groups. Accordingly, the first monomer and the second monomer may be polymerized or copolymerized with each other. The first monomer and the second monomer may be formed by copolymerizing into a crosslinked polymer or a network polymer. The crosslinked polymer or network polymer may be thermosetting. Therefore, the polymerization of the electrolyte monomer may improve flame retardancy.

In some embodiments, the content of the second monomer relative to the first monomer may be 0.5 to 2, 0.5 to 1.5, 0.8 to 1.5, or 0.8 to 1.2, based on weight. Within this range, the first monomer and the second monomer may be formed

by copolymerizing into a crosslinked polymer or a network polymer as a whole. Accordingly, the thermosetting properties of the copolymer (e.g., a copolymer of the first monomer and the second monomer) may be improved, and the flame retardancy of an electrolyte including the copolymer may be enhanced.

In some embodiments, $R_1$ in Formula 1 may be a fluorine-substituted C2 to C12, C2 to C10, or C2 to C8 alkylene group. Accordingly, the first monomer may include fluorine. Fluorine atoms may suppress a combustion reaction by receiving electrons from radicals that initiate a chain reaction upon ignition. Therefore, the flame retardancy of the first monomer may be improved. In addition, the fluorine may react with lithium to form a protective film on the surface of a lithium electrode, thereby improving the stability and capacity efficiency of a secondary battery.

In some embodiments, $R_1$ in Formula 1 may be a fluorine-substituted C2 to C10, C2 to C8, or C2 to C6 oxyalkylene group. Accordingly, the oxygen in the oxyalkylene group included in the first monomer may facilitate the dehydration reaction of the polymetaphosphoric acid, forming a carbon compound, thereby further improving the flame retardancy of the electrolyte monomer including the first monomer.

The term "fluorine-substituted" as used herein may mean that at least one hydrogen atom of the compound is substituted with fluorine (F).

In some embodiments, l, m and n in Formula 2 may each independently be 0 to 3, 0 to 2, or 1. Accordingly, the phosphorus content may be increased within the same volume (or molecule). Consequently, a phosphorus-based protective layer may be readily formed, and flame retardancy may be improved.

In some embodiments, $R_2$, $R_3$ and $R_4$ in Formula 2 may each independently be an unsubstituted C2 to C10, C2 to C8, or C2 to C4 alkylene group. Accordingly, the production of carbon compounds generated by the esterification and dehydrogenation reactions of the polymetaphosphoric acid may be promoted, thereby improving self-extinguishing properties upon ignition.

In some embodiments, at least two of $R_2$, $R_3$ and $R_4$ in Formula 2 may be the same. In one embodiment, $R_2$, $R_3$ and $R_4$ in Formula 2 may be the same. Accordingly, when the monomer represented by Formula 1 and/or the monomer represented by Formula 2 is polymerized, the polymerization may be stably extended. Therefore, the mechanical stability of the electrolyte for a secondary battery including a polymer derived from the electrolyte monomer may be improved.

In some embodiments, at least two of l, m and n in Formula 2 may be the same integer. In one embodiment, 1, m and n in Formula 2 may be the same integer. Accordingly, the lengths of the functional groups of Formula 2 (e.g., functional groups including a (meth)acrylate group) may be the same or similar. Therefore, the monomer represented by Formula 2 may be stably polymerized and extended. As a result, the mechanical stability of the electrolyte for a secondary battery may be improved.

In some embodiments, the first monomer may include a monomer represented by Formula 1-a below.

[Formula 1-a]

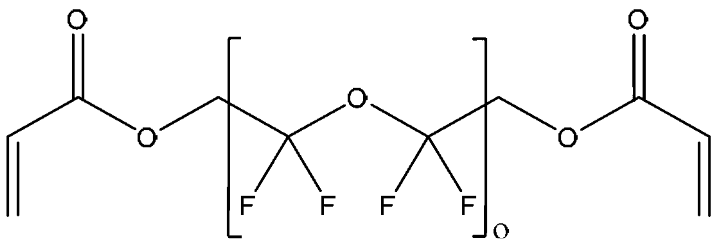

In Formula 1-a, "o" may be an integer from 1 to 5, 1 to 4, or 1 to 3. Accordingly, the first monomer may include an alkoxy group and fluorine, thereby further improving the flame retardancy of an electrolyte including the monomer represented by Formula 1-a. In addition, the first monomer may include two acrylate groups at the terminals, which may copolymerize with the second monomer to form a crosslinked polymer or a network polymer, thereby improving high-temperature stability.

In some embodiments, the compound represented by Formula 1-a may include equivalents thereof, and at least one hydrogen atom bonded to a carbon atom in Formula 1-a may be further substituted with a substituent within an equivalent range. For example, at least one hydrogen atom bonded to a carbon atom in Formula 1-a may be further substituted with deuterium or an alkyl group having 1 to 5 carbon atoms.

In some embodiments, the first monomer may include a monomer represented by Formula 1-b below.

[Formula 1-b]

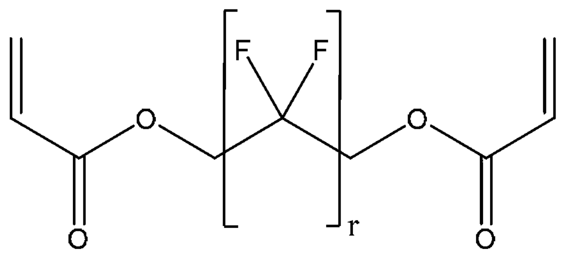

In Formula 1-b, r may be an integer from 1 to 8, 1 to 6, or 2 to 6. Accordingly, the first monomer may include fluorine and two acrylate groups at the terminals. Therefore, the flame retardancy of an electrolyte including the monomer represented by Formula 1-b may be further improved, and high-temperature stability may be improved by being copolymerized with the second monomer to form a crosslinked polymer or a network polymer.

In some embodiments, the compound represented by Formula 1-b may include equivalents thereof, and at least one hydrogen atom bonded to a carbon atom in Formula 1-b may be further substituted with a substituent within an equivalent range. For example, at least one hydrogen atom bonded to a carbon atom in Formula 1-b may be further substituted with deuterium or an alkyl group having 1 to 5 carbon atoms.

In one embodiment, the first monomer may include at least one of a monomer represented by Formula 1-1 below and a monomer represented by Formula 1-2 below.

[Formula 1-1]

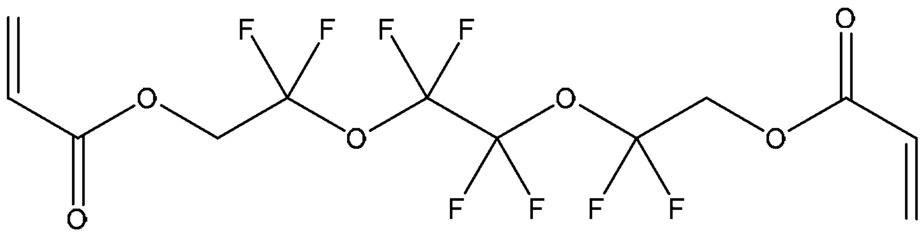

[Formula 1-2]

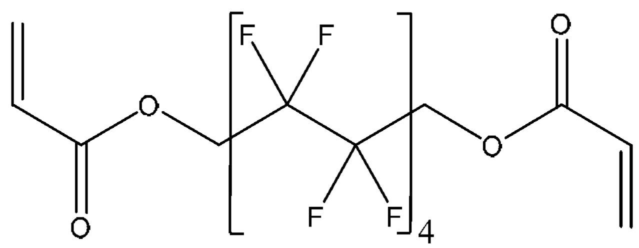

The monomers represented by Formula 1-1 and Formula 1-2 include a fluorine atom and both terminals are acrylate groups (two acrylate groups). Accordingly, the flame retardancy of the first monomer including at least one of the monomers represented by Formula 1-1 and Formula 1-2 may be improved. In addition, the monomers may be copolymerized with the second monomer to form a crosslinked polymer or a network polymer, thereby improving flame retardancy.

In some embodiments, the compounds represented by Formula 1-1 and 1-2 may include equivalents thereof, and at least one hydrogen atom bonded to a carbon atom in Formula 1-1 and 1-2 may be further substituted with a substituent within an equivalent range. For example, at least one hydrogen atom bonded to a carbon atom in Formula 1-1 and 1-2 may be further substituted with deuterium or an alkyl group having 1 to 5 carbon atoms.
In some embodiments, the second monomer may include a monomer represented by Formula 2-a below.

[Formula 2-a]

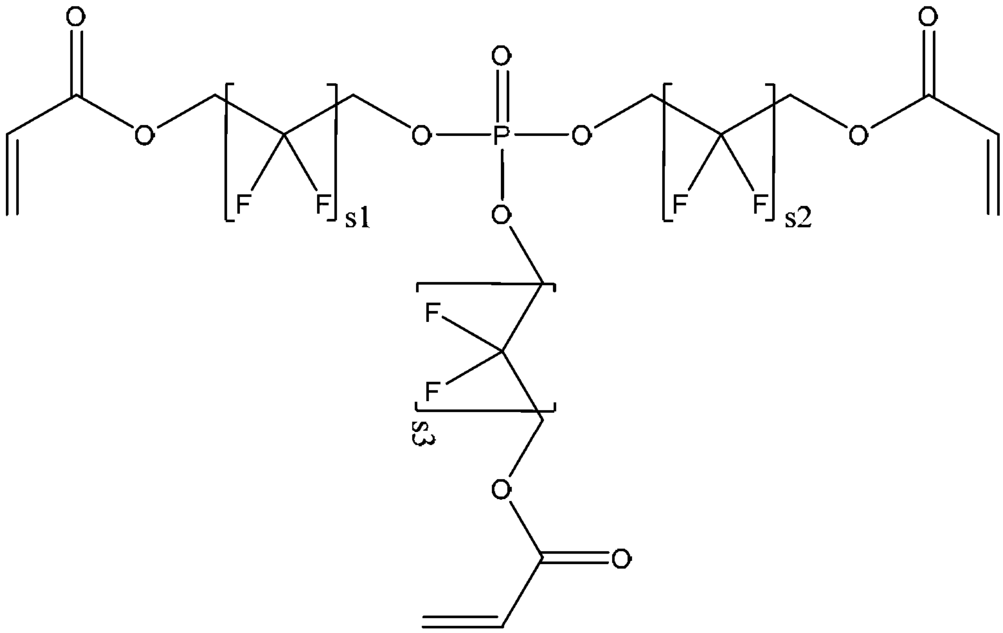

In Formula 2-a, s1, s2 and s3 may each independently be an integer from 0 to 5, 0 to 4, or 0 to 3. Accordingly, the phosphorus content per molecule of the second monomer may be increased, and fluorine may be included. Therefore, the flame retardancy of an electrolyte including the monomer represented by Formula 2-a may be improved. In addition, the compound represented by Formula 2-a may include three acrylate groups at the terminals. Therefore, it may be stably polymerized with the first monomer to form a network-like polymer, and high-temperature stability may be further improved.
In some embodiments, the compound represented by Formula 2-a may include equivalents thereof, and at least one hydrogen atom bonded to a carbon atom in Formula 2-a may be further substituted with a substituent within an equivalent range. For example, at least one hydrogen atom bonded to a carbon atom in Formula 2-a may be further substituted with deuterium or an alkyl group having 1 to 5 carbon atoms.
In some embodiments, the second monomer may include a monomer represented by Formula 2-b below.

[Formula 2-b]

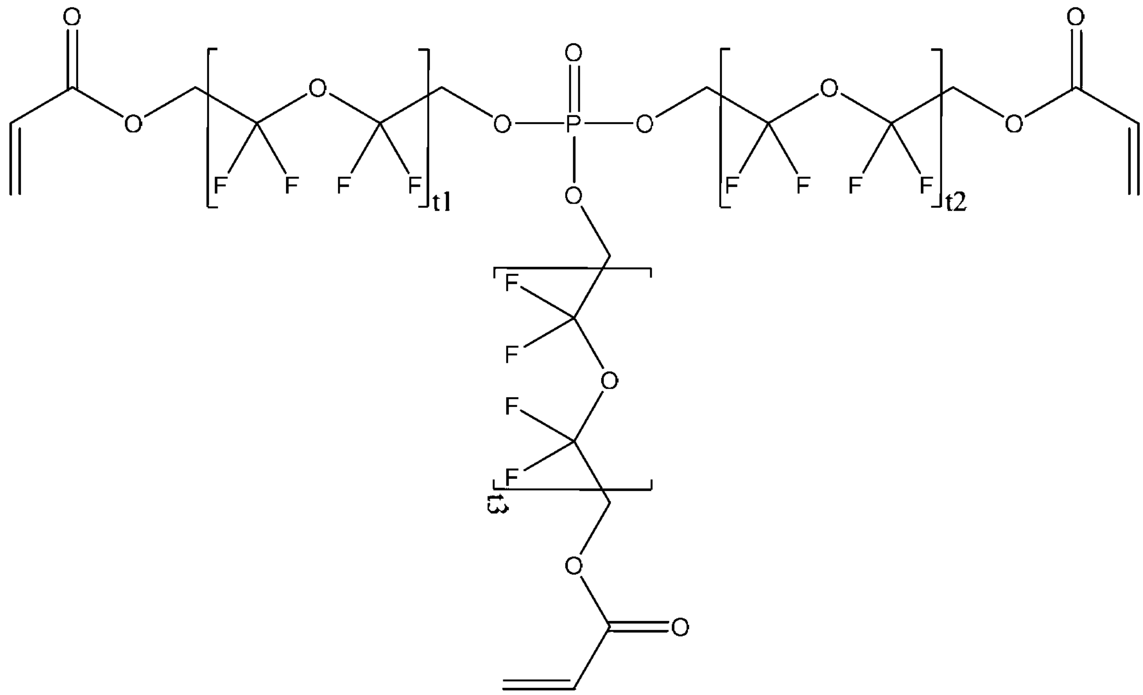

In Formula 2-b, t1, t2 and t3 may each independently be an integer from 1 to 5, 1 to 4, or 1 to 3. The monomer represented by Formula 2-b may include both an alkoxy group and fluorine. Accordingly, the flame retardancy of an electrolyte including the monomer represented by Formula 2-b may be improved. In addition, the monomer represented by Formula 2-b may include three acrylate groups at the terminals. Therefore, it may be polymerized with the first monomer to form a network polymer, and high-temperature stability may be further improved.

In some embodiments, the compound represented by Formula 2-b may include equivalents thereof, and at least one hydrogen atom bonded to a carbon atom in Formula 2-b may be further substituted with a substituent within an equivalent range. For example, at least one hydrogen atom bonded to a carbon atom in Formula 2-b may be further substituted with deuterium or an alkyl group having 1 to 5 carbon atoms.

In one embodiment, the second monomer may include at least one of a monomer represented by Formula 2-1 below and a monomer represented by Formula 2-3 below.

[Formula 2-1]

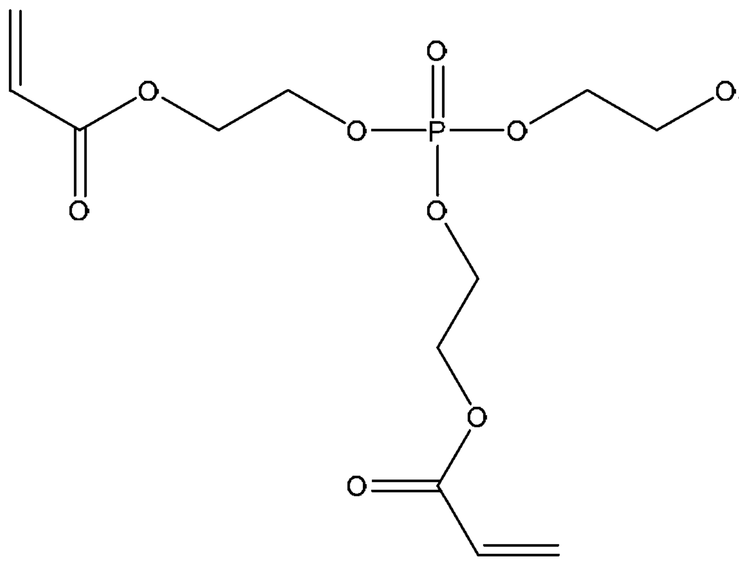

[Formula 2-2]

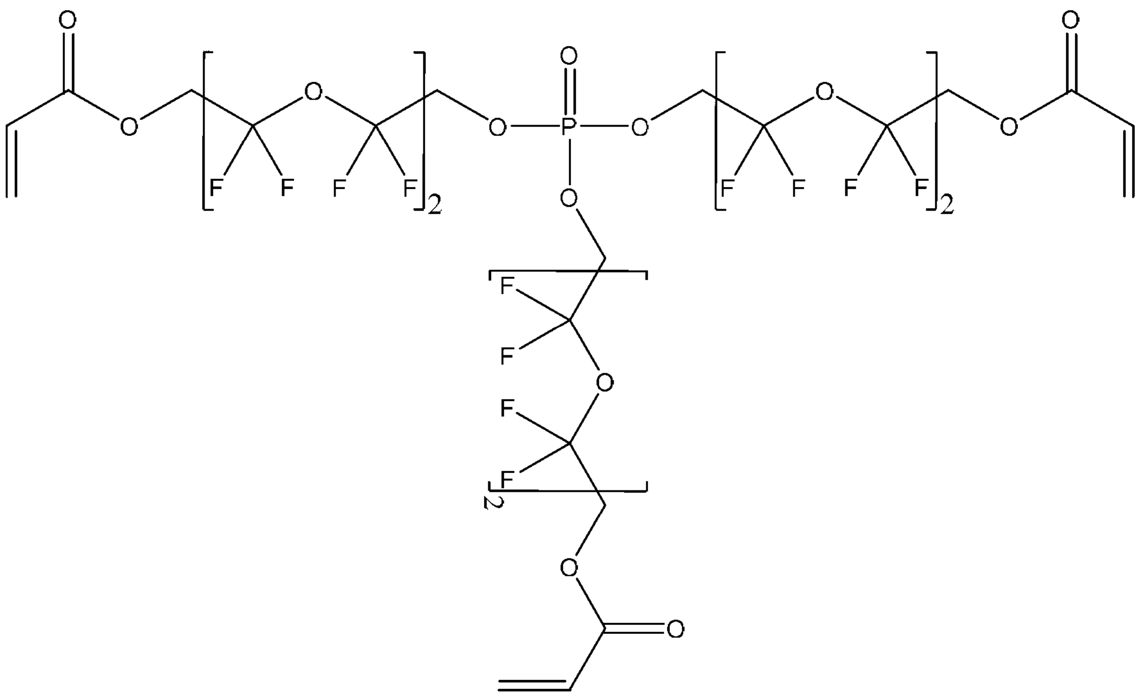

[Formula 2-3]

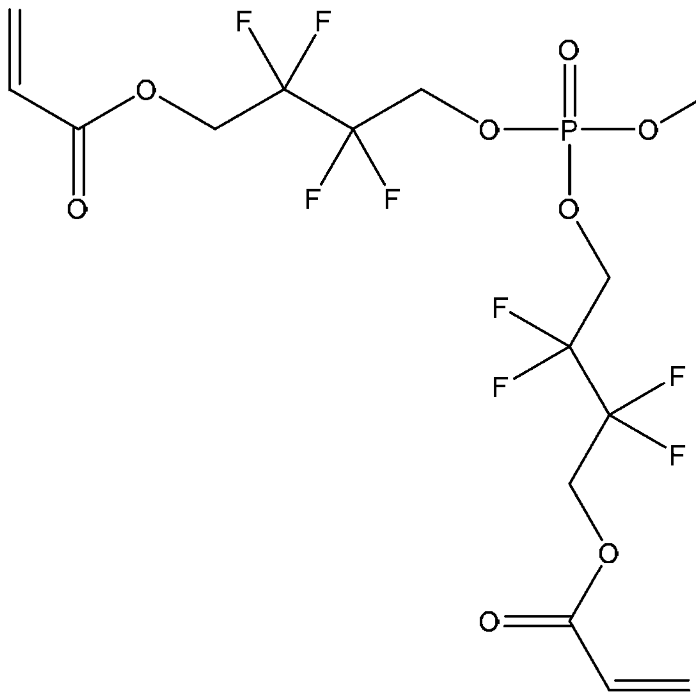

The monomers represented by Formula 2-1 to Formula 2-3 are phosphorus compounds including phosphate groups and having acrylate groups (three acrylate groups) at all terminals. Accordingly, the flame retardancy of the second monomer including at least one of the monomers represented by Formula 2-1 to Formula 2-2 may be improved. In addition, the second monomer may be copolymerized with the first monomer to form a crosslinked polymer or a network polymer, thereby improving flame retardancy.

In some embodiments, the compounds represented by Formula 2-1 to 2-3 may include equivalents thereof, and at least one hydrogen atom bonded to a carbon atom in Formula 2-1 to 2-3 may be further substituted with a substituent within an equivalent range. For example, at least one hydrogen atom bonded to a carbon atom in Formula 2-1 to 2-3 may be further substituted with deuterium or an alkyl group having 1 to 5 carbon atoms.

In some embodiments, the electrolyte monomer may include at least one of the monomer represented by Formula 1-a and the monomer represented by Formula 1-b, and at least one of the monomer represented by Formula 2-a and the monomer represented by Formula 2-b. Accordingly, the electrolyte monomer may be copolymerized in a stable

manner into a crosslinked polymer or a network polymer, and flame retardancy may be improved.

In some embodiments, the electrolyte monomer may include at least one of the monomers represented by Formula 1-1 and Formula 1-2, and at least one of the monomers represented by Formula 2-1 to Formula 2-3. Accordingly, the electrolyte monomer may be more stably copolymerized into a crosslinked polymer or a network polymer, and flame retardancy may be further improved.

In one embodiment, the electrolyte monomer may include both the monomer represented by Formula 1-1 and the monomer represented by Formula 2-1. Accordingly, the electrolyte monomer may be copolymerized into a copolymer including fluorine and having a high weight-based phosphorus content. Consequently, the flame retardancy of the copolymer may be further improved.

An electrolyte for a secondary battery according to exemplary embodiments (hereinafter, also abbreviated as "electrolyte") may include a flame retardant compound 110 including a polymer derived from the above-described electrolyte monomer and a lithium salt. In some embodiments, the electrolyte may include the flame retardant compound 110, the lithium salt, and an electrolyte solution. For example, the flame retardant compound may include a polymer of the above-described electrolyte monomer.

The lithium salt may be represented by, for example, $Li^+X^-$, and as an anion ($X^-$) of the lithium salt, $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$, etc. may be exemplified.

According to exemplary embodiments, the flame retardant compound 110 may include a polymer of the above-described electrolyte monomer. For example, the flame retardant compound 110 may be a polymer and/or copolymer of the above-described electrolyte monomer. Accordingly, side reactions between the flame retardant compound 110 and compounds such as a lithium salt or an electrolyte solution may be suppressed. In addition, the flame retardant compound 110 may include a phosphorus-containing functional group, thereby blocking oxygen during combustion and preventing thermal runaway.

In some embodiments, the flame retardant compound 110 may be a compound formed by polymerizing or copolymerizing an electrolyte monomer having a thermally reactive functional group and/or a photoreactive functional group. For example, the above-described electrolyte monomer may include an acrylate group. Accordingly, the acrylate group may function as a thermally reactive functional group or a photoreactive functional group.

In some embodiments, the flame retardant compound 110 may have a structure in which the acrylate group of the monomer represented by Formula 1 and the acrylate group of the monomer represented by Formula 2 are copolymerized.

For example, the flame retardant compound 110 may have a structure in which the acrylate group of at least one of the monomers represented by Formula 1-a and Formula 1-b and the acrylate group of at least one of the monomers represented by Formula 2-a and Formula 2-b are copolymerized.

For example, the flame retardant compound 110 may have a structure in which the acrylate group of at least one of the monomers represented by Formula 1-1 and Formula 1-2 and the acrylate group of at least one of the monomers represented by Formula 2-1 to Formula 2-3 are copolymerized. Accordingly, the flame retardant compound 110 may be formed in the form of a network or crosslinked polymer. Therefore, the flame retardancy of the electrolyte including the flame retardant compound 110 may be further improved.

In some embodiments, the electrolyte 100 may further include a composite electrolyte including an organic polymer and an inorganic electrolyte.

In some embodiments, the composite electrolyte may have a film form. In one embodiment, the organic polymer and the inorganic electrolyte may form a composite membrane. For example, the organic polymer and the inorganic electrolyte may be physically bound within the composite membrane.

The organic polymer may be an ion conductive polymer. For example, the organic polymer may include repeating units of ether-based, styrene-based, or fluorinated hydrocarbonbased groups.

In some embodiments, the organic polymer may include at least one selected from the group consisting of polyvinylidene fluoride (PVDF), polystyrene (PS), polyether sulfone (PES), polyurethane (PU), polyethylene oxide (PEO), polyvinylidene fluoride-co-hexafluoropropylene (PVDF-co-HFP), polyimide (PI), polymethyl methacrylate (PMMA), polyvinyl chloride (PVC), polyvinyl alcohol (PVA), polyacrylonitrile (PAN), polyethyl methacrylate (PEMA), polycaprolactone (PCL), and polyvinyl pyrrolidone (PVP). In one embodiment, the organic polymer may include at least one selected from the group consisting of polyvinylidene fluoride, polystyrene, polyether sulfone, and polyurethane. Accordingly, the mobility of lithium-ion conduction within the composite electrolyte may be improved, thereby enhancing ionic conductivity.

In some embodiments, the inorganic electrolyte may be an oxide-based solid electrolyte. For example, the oxide-based solid electrolyte may include an ion conductive compound containing a metal or oxygen. For example, the oxide-based solid electrolytes may include LLTO compounds, LLZO compounds, $Li_{6.4}La_3Zr_{1.4}Ta_{0.6}O_{12}$, $Li_6La_2CaTa_2O_{12}$, $Li_6La_2ANb_2O_{12}$ (A is Ca or Sr), $Li_2Nd_3TeSbO_{12}$, $Li_3BO_{2.5}N_{0.5}$, $Li_9SiAlO_8$, LAGP compounds, LATP compounds, $Li_{1+x}Ti_{2-x}Al_xSi_y(PO_4)_3$ ($0 \le x \le 1$, $0 \le y \le 1$), $LiAl_xZr_{2-x}(PO_4)_3$ ($0 \le x \le 1$, $0 \le y \le 1$), $LiTi_xZr_{2-x}(PO_4)_3$ ($0 \le x \le 1$, $0 \le y \le 1$) LISICON compounds, LIPON compounds, perovskite compounds, NASICON compounds, and metal oxides such as $Al_2O_3$, $ZnO_2$, $Ce_2O_2$, $TiO_2$,

$ZrO_2$, $HfO_2$, $MnO_2$, MgO, $WO_2$, and $V_2O_5$.

In one embodiment, the inorganic electrolyte may be an oxide-based solid electrolyte containing lithium. For example, the oxide-based solid electrolyte containing lithium may include an LLTO compound, an LLZO compound (e.g., a garnet-type LLZO compound), a NASICON compound, a LATP compound, a perovskite compound, etc. Accordingly, the ionic conductivity and mechanical strength of the electrolyte 100 may be improved, thereby suppressing lithium dendrite growth, and enhancing high-temperature stability and cycle life characteristics.

In some embodiments, the content of the flame retardant compound 110 may be 3% by weight ("wt%") to 20 wt%, 3 wt% to 15 wt%, or 3 wt% to 10 wt% based on the total weight of the electrolyte for a secondary battery. Within this range, the ionic conductivity of the electrolyte 100 may be improved, while the flame retardancy may be enhanced. In one embodiment, the content of the flame retardant compound 110 may be 4 wt% to 10 wt%, 4 wt% to 8 wt%, or 4.5 wt% to 8 wt% based on the total weight of the electrolyte for a secondary battery. Within this range, the flame retardancy of the electrolyte 100 may be enhanced, while the ionic conductivity may be further improved.

In some embodiments, pores may be formed in the composite membrane. Accordingly, the flame retardant compound 110 may be positioned in the pores of the composite membrane. Accordingly, the ionic conductivity and flame retardancy of the electrolyte 100 may be enhanced, and the resistance may be reduced.

FIG. 1 is a schematic flowchart for describing the processes of a method for manufacturing an electrolyte for a secondary battery according to exemplary embodiments. Hereinafter, the method for manufacturing the above-described electrolyte for a secondary battery will be described with reference to FIG. 1.

Referring to FIG. 1, a mixture including the above-described electrolyte monomer and an electrolyte solution may be prepared (e.g., step S10).

For example, the mixture may be prepared by mixing the above-described electrolyte monomer and an electrolyte solution.

In some embodiments, the mixture may further include an organic polymer and an inorganic electrolyte. For example, the mixture may include an electrolyte monomer, an electrolyte solution, an organic polymer, and an inorganic electrolyte.

In some embodiments, the organic polymer and the inorganic electrolyte may be mixed with the electrolyte monomer and the electrolyte solution in the form of a composite electrolyte membrane.

The composite electrolyte membrane may be prepared by drying a preliminary composite membrane including the organic polymer, the inorganic electrolyte, a first solvent, and a second solvent.

In some embodiments, the solubility of the organic polymer in the first solvent may be greater than the solubility of the organic polymer in the second solvent. For example, the solubility of the organic polymer in the first solvent may be 1 g/100 g or more, 10 g/100 g or more, 33 g/100 g or more, 100 g/100 g or more, or 100 g/100 g to 1,000 g/100 g. For example, the solubility of the organic polymer in the second solvent may be less than 1 g/100 g, less than 0.1 g/100 g, or less than 0.01 g/100 g.

In one embodiment, the organic polymer within the preliminary composite membrane may be dissolved in the first solvent, and not be dissolved in the second solvent.

For example, the organic polymer may be soluble in the first solvent. Accordingly, the organic polymer may be dissolved in the first solvent.

For example, the organic polymer may be insoluble in the second solvent. Accordingly, the organic polymer may not be substantially dissolved in the second solvent.

The term "solubility" refers to the mass (g) of the organic polymer dissolved in 100 g of the first or second solvent. For example, a solubility of 1 g/100 g may mean that 1 g of the organic polymer is dissolved in 100 g of the first or second solvent.

In some embodiments, the first solvent may be miscible with the second solvent. For example, the first solvent and the second solvent may be mixed or blended.

The organic polymer and the inorganic electrolyte may be the organic polymer and inorganic electrolyte described above.

The first solvent may be a solvent that dissolves the organic polymer and may be miscible with the second solvent. The first solvent may include, for example, tetrahydrofuran (THF), 2-methyltetrahydrofuran (2-Me-THF), N-methyl-2-pyrrolidone (NMP), 1,3-dioxolane, and vinylene carbonate (VC), etc. These may be used alone or in combination of two or more thereof. In one embodiment, the first solvent may be tetrahydrofuran.

The second solvent may be a solvent that does not dissolve the organic polymer and may be miscible with the first solvent. The second solvent may include, for example, heptane, octane, nonane, decane, dodecane, 2,2,4-trimethylpentane and the like. These may be used alone or in combination of two or more thereof. In one embodiment, the second solvent may be octane.

The drying may be performed by casting the preliminary composite membrane onto a substrate (e.g., a glass substrate or a plastic substrate) and then drying it.

In exemplary embodiments, drying the preliminary composite membrane to prepare a composite membrane may

include removing the first solvent and the second solvent from the preliminary composite membrane.

In some embodiments, drying the preliminary composite membrane to prepare a composite membrane may include removing the first solvent at a first temperature and removing the second solvent at a second temperature. For example, the first solvent in the preliminary composite membrane may be dried, and then the second solvent may be dried to prepare the composite membrane. The first drying and the second drying may be performed sequentially, or the second drying may be performed after a certain period of time has elapsed after the first drying. Accordingly, the first solvent may be dried first, and then the second solvent may be dried.

In some embodiments, the content of the electrolyte monomer may be 3 wt% to 20 wt%, 3 wt% to 15 wt%, or 3 wt% to 10 wt% based on the total weight of the mixture. Within this range, the ionic conductivity of the electrolyte may be improved, while the flame retardancy may be enhanced. In one embodiment, the content of the electrolyte monomer may be 4 wt% to 10 wt%, 4 wt% to 8 wt%, or 4.5 wt% to 8 wt% based on the total weight of the mixture. Within this range, the ionic conductivity of the electrolyte may be further improved, while the flame retardancy of the electrolyte may be further enhanced.

In some embodiments, the above-described electrolyte monomer may include a phosphorus-containing functional group and at least one of a thermally reactive functional group and a photoreactive functional group.

In some embodiments, the electrolyte solution may include a thermal initiator and/or a photoinitiator to induce thermal curing and/or photocuring of the flame retardant monomer. In one embodiment, the content of the thermal initiator and/or photoinitiator may be 0.5 to 2 parts by weight ("wt parts") to 2 wt parts based on 100 wt parts of the mixture included in each electrolyte composition.

For example, the thermal initiator may include azo compounds such as 2,2-azobis(2-cyanobutane), 2,2-azobis(methylbutyronitrile), 2,2'-azoisobutyronitrile (AIBN), azobisdimethyl valeronitrile (AMVN), or peroxide compounds such as benzoyl peroxide, acetyl peroxide, dilauryl peroxide, di-tert-butyl peroxide, cumyl peroxide, or hydrogen peroxide.

For example, the photoinitiator may include acyl phosphines such as 2-hydroxy-2-methyl-1-phenylpropane-1-one (HMPP), benzoin ether, dialkyl acetophenone, hydroxyl alkylketone, phenyl glyoxylate, benzyl dimethyl ketal, 2,4,6-trimethyl-benzoyl-trimethyl phosphine oxide, and $\alpha$-aminoketones.

In some embodiments, the electrolyte solution may include a lithium salt. The lithium salt may include the above-described lithium salt. Accordingly, the ionic conductivity of the electrolyte for a secondary battery may be improved.

According to exemplary embodiments, the mixture may include an electrolyte solution.

In some embodiments, the electrolyte solution may include an ether-based electrolyte solution containing fluorine (F). For example, the ether-based electrolyte solution containing the fluorine may include at least one of 1,1,2,2-tetrafluoroethyl-2,2,2-trifluoroethyl ether, 1,1,2,2-tetrafluoroethyl-2,2,3,3-tetrafluoropropyl ether, 2,2,3,3-tetrafluoro-1,4-dimethoxybutane (FDMB), 1,1,2,2,3,3,4,4-octafluoro-5-methoxy pentane and bis(2,2,2-trifluoroethyl)ether. Due to the electronegativity of fluorine in the ether-based electrolyte solution containing fluorine, the dissociation of the lithium salt may be affected. The fluorine separated from the fluorine-based electrolyte solution may react with lithium to form a protective film on the surface of the lithium electrode, thereby improving the stability and capacity efficiency of the secondary battery. In addition, the separated fluorine may suppress a chain reaction upon ignition, thereby improving flame retardancy.

In some embodiments, the electrolyte solution may include an organic solvent. For example, the organic solvent may include carbonate-based organic solvents such as propylene carbonate (PC), ethylene carbonate (EC), diethyl carbonate (DEC), dimethyl carbonate (DMC), ethyl methyl carbonate (EMC), methyl propyl carbonate (MPC), dipropyl carbonate (DPC), and vinylene carbonate (VC), etc.; or solvents such as dimethyl sulfoxide, acetonitrile, dimethoxyethane, diethoxyethane, sulfolane, gamma-butyrolactone, propylene sulfite and tetrahydrofuran. These may be used alone or in combination of two or more thereof.

In some embodiments, the content of the fluorine-containing ether electrolyte solution may be 10% by volume ("vol%") to 60 vol%, 20 vol% to 60 vol%, or 20 vol% to 55 vol% based on the total volume of the electrolyte solution. Within this range, the flame retardancy of the electrolyte solution including the fluorine-containing solvent may be improved, and the capacity efficiency of a secondary battery including the electrolyte solution may be improved.

In one embodiment, the electrolyte solution may further include an additive. The additive may include a cyclic carbonate compound, a fluorine-substituted cyclic carbonate compound, a sultone compound, a cyclic sulfate compound, a cyclic sulfite compound, a phosphate compound, a borate compound and the like.

The cyclic carbonate compound may include vinylene carbonate, vinyl ethylene carbonate (VEC), etc.

The fluorine-substituted cyclic carbonate compound may include fluoroethylene carbonate (FEC), etc.

The sultone compound may include 1,3-propane sultone, 1,3-propene sultone, 1,4-butane sultone, etc.

The cyclic sulfate compound may include 1,2-ethylene sulfate, 1,2-propylene sulfate, etc.

The cyclic sulfite compound may include ethylene sulfite, butylene sulfite, etc.

The phosphate compound may include lithium difluoro bis(oxalato) phosphate, lithium difluoro phosphate, etc.

The borate compound may include lithium bis(oxalate) borate, etc.

In one embodiment, the organic solvent may be a carbonate-based organic solvent. Accordingly, the electrical

stability and chemical stability of the electrolyte for a secondary battery may be further improved.

According to exemplary embodiments, the mixture may be cured (e.g., step S20). Accordingly, an electrolyte for a secondary battery may be prepared.

In some embodiments, the electrolyte monomer may be polymerized or copolymerized while the mixture is cured. Accordingly, the electrolyte for a secondary battery may include a flame retardant compound including a polymer of the electrolyte monomer.

In some embodiments, the content of the electrolyte monomer in the total weight of the mixture may be substantially equal to the content of the flame retardant compound in the total weight of the electrolyte. For example, the weight change (decrease or increase) during the curing of the mixture may be 0.0001 wt% or less, or 0.00001 wt% or less, based on the total weight of the electrolyte monomer. Accordingly, the content of the electrolyte monomer in the total weight of the mixture may be substantially equal to the content of the flame retardant compound in the total weight of the electrolyte.

In some embodiments, curing the mixture may include heat treating the mixture. For example, by heat curing the mixture, the electrolyte monomer within the mixture may be polymerized or copolymerized to form a flame retardant compound.

In some embodiments, the heat treatment may be performed at a temperature of 40 °C to 160 °C, 60 °C to 160 °C, 80 °C to 160 °C, 80 °C to 140 °C, or 80 °C to 120 °C. In one embodiment, the heat treatment may be performed by increasing the temperature from room temperature (e.g., 25 °C) at a rate of 1 °C/min to 10 °C/min, 2 °C/min to 10 °C/min, or 3 °C/min to 10 °C/min.

In some embodiments, the heat treatment may be performed for 30 minutes to 2 hours, 30 minutes to 1.5 hours, or 45 minutes to 1.25 hours.

Within the above temperature and time ranges, the electrolyte monomer within the mixture may be sufficiently polymerized or copolymerized.

In some embodiments, curing the mixture may include irradiating the mixture with light. For example, by photocuring the mixture, the electrolyte monomer within the mixture may be polymerized or copolymerized to form a flame retardant compound. Accordingly, the polymerization or copolymerization reaction of the electrolyte monomer may be performed at a relatively low temperature. Therefore, side reactions of the electrolyte solution, etc., caused by high-temperature heat treatment may be prevented.

In some embodiments, the UV photocuring process for photopolymerization may be performed using light having a wavelength of 250 nm to 400 nm and an intensity of 800 mW/cm$^2$ to 1100 mW/cm$^2$. In one embodiment, the UV photocuring process may be performed for 5 to 20 seconds. Within the wavelength and intensity ranges, the flame retardant monomer may be sufficiently polymerized or copolymerized.

FIG. 2 is a schematic cross-sectional view illustrating an electrode cell according to exemplary embodiments.

The secondary battery according to exemplary embodiments may include an electrode cell. Referring to FIG. 2, the electrode cell may include a cathode 240, an anode 260 disposed to face the cathode 240, and an electrolyte layer 210 disposed between the cathode 240 and the anode 260.

The cathode 240 may include a cathode current collector 235 and a cathode active material layer 210 disposed on at least one surface of the cathode current collector 235.

The cathode current collector 235 may include stainless steel, nickel, aluminum, titanium, or an alloy thereof. The cathode current collector 235 may also include aluminum or stainless steel having a surface treated with carbon, nickel, titanium, or silver. The cathode current collector 235 may have a thickness of, for example, 10 μm to 50 μm, but is not limited thereto.

The cathode active material may include a compound capable of reversibly intercalating and deintercalating lithium ions.

According to exemplary embodiments, the cathode active material may include a lithium-nickel metal oxide. The lithium-nickel metal oxide may further include at least one of cobalt (Co), manganese (Mn) and aluminum (Al).

In some embodiments, the cathode active material or the lithium-nickel metal oxide may include a layered structure or a crystal structure represented by Formula 3 below.

[Formula 3] $Li_xNi_aM_bO_{2+2}$

In Formula 3, x, a, b and z may satisfy $0.9 \leq x \leq 1.2$, $0.6 \leq a \leq 0.99$, $0.01 \leq b \leq 0.4$, and $-0.5 \leq z \leq 0.1$. As described above, M may include Co, Mn and/or Al.

The chemical structure represented by Formula 3 indicates a bonding relationship between elements included in the layered structure or the crystal structure of the cathode active material, and does not exclude other additional elements. For example, M includes Co and/or Mn, and Co and/or Mn may be provided as main active elements of the cathode active material together with Ni. Here, it should be understood that Formula 3 is provided to express the bonding relationship between the main active elements, and is a formula encompassing the introduction and substitution of additional

elements.

In one embodiment, the cathode active material may further include auxiliary elements which are added to the main active elements, in order to enhance chemical stability thereof or the layered structure/crystal structure. The auxiliary element may be incorporated into the layered structure/crystal structure together with the main active elements to form a bond, and it should be understood that this case is also included within the chemical structure range represented by Formula 3.

The auxiliary element may include, for example, at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr. The auxiliary element may serve as an auxiliary active element which contributes to the capacity/output activity of the cathode active material together with Co or Mn, such as Al.

For example, the cathode active material or the lithium-nickel metal oxide may include a layered structure or a crystal structure represented by Formula 3-1 below.

[Formula 3-1] $Li_xNi_aMl_{b1}M2_{b2}O_{2+z}$

In Formula 3-1, M1 may include Co, Mn and/or Al. M2 may include the above-described auxiliary elements. In Formula 3-1, x, a, b1, b2 and z may satisfy $0.9 \leq x \leq 1.2$, $0.6 \leq a \leq 0.99$, $0.01 \leq b1+b2 \leq 0.4$, and $-0.5 \leq z \leq 0.1$.

The cathode active material may further include a coating element or a doping element. For example, elements which are substantially the same as or similar to the above-described auxiliary elements may be used as the coating element or the doping element. For example, the above-described elements may be used alone or in combination of two or more thereof as the coating element or the doping element.

The coating element or the doping element may exist on the surface of the lithium-nickel metal oxide particles, or may penetrate through the surface of the lithium-nickel metal composite oxide particles to be incorporated into the bonding structure represented by Formula 3 or Formula 3-1 above.

The cathode active material may include a nickel-cobalt-manganese (NCM)-based lithium oxide. In this case, an NCM-based lithium oxide with an increased content of nickel may be used.

Nickel (Ni) may be provided as a transition metal associated with the output and capacity of the lithium secondary battery. Therefore, as described above, by employing a high-nickelcontent (high-Ni) composition in the cathode active material, a high-capacity cathode and a high-capacity lithium secondary battery may be provided.

In this regard, as the content of Ni increases, long-term storage stability and cycle life stability of the cathode or the secondary battery may be relatively reduced, and side reactions with the electrolyte may also increase. However, according to exemplary embodiments, by including Co, the cycle life stability and capacity retention characteristics may be improved through Mn while maintaining electrical conductivity.

The content of Ni (e.g., the molar fraction of nickel based on the total molar amount of nickel, cobalt and manganese) in the NCM-based lithium oxide may be 0.6 or more, 0.7 or more, or 0.8 or more. In some embodiments, the content of Ni may be 0.8 to 0.95, 0.82 to 0.95, 0.83 to 0.95, 0.84 to 0.95, 0.85 to 0.95, or 0.88 to 0.95.

In some embodiments, the cathode active material may include a lithium cobalt oxide-based active material, a lithium manganese oxide-based active material, a lithium nickel oxide-based active material, or a lithium iron phosphate (LFP)-based active material (e.g., $LiFePO_4$).

In some embodiments, the cathode active material may include, for example, a manganese (Mn)-rich active material, a lithium (Li)-rich layered oxide (LLO)/over-lithiated oxide (OLO)-based active material, or a cobalt (Co)-less active material, which has a chemical structure or a crystal structure represented by Formula 4.

[Formula 4] $p[Li_2MnO_3]\cdot(1-p)[Li_qJO_2]$

In Formula 4, p and q may satisfy $0<p<1$, and $0.9 \leq q \leq 1.2$, and J may include at least one element selected from Mn, Ni, Co, Fe, Cr, V, Cu, Zn, Ti, Al, Mg and B.

In some embodiments, the cathode active material may be a sodium-based active material or a potassium-based active material. The sodium-based active material may include a layered structure or a crystal structure in which Li of Formula 3, Formula 3-1 and/or Formula 4, described above, is substituted with Na and/or K.

In some embodiments, the cathode active material may be a calcium-based active material. The calcium-based active material may include, for example, a calcium-cobalt active material and a calcium-phosphate active material.

For example, a cathode slurry may be prepared by mixing the cathode active material in a solvent. The cathode slurry may be coated on the cathode current collector, and then dried and roll-pressed to prepare the cathode active material layer. The coating process may be performed using methods such as gravure coating, slot die coating, simultaneous multilayer die coating, imprinting, doctor blade coating, dip coating, bar coating or casting, etc., but is not limited thereto. The cathode active material layer 230 may further include a binder, and optionally may further include an electrolyte, a conductive material, a thickener or the like.

Solvents used in the preparation of the cathode active material layer 230 may include, for example, N-methyl-2-pyrrolidone (NMP), dimethylformamide (DMF), dimethylacetamide (DMA), N,N-dimethylaminopropylamine (DMAPA), ethylene oxide (EO), tetrahydrofuran (THF), etc.

In one embodiment, the electrolyte included in the cathode active material layer 230 may be the above-described electrolyte for a secondary battery. In one embodiment, the electrolyte included in the cathode active material may be the above-described inorganic electrolyte. For example, the secondary battery may be provided as an all-solid-state battery including the above-described electrolyte or inorganic electrolyte.

The binder may include polyvinylidene fluoride (PVDF), poly(vinylidene fluoride-co-hexafluoropropylene), polyacrylonitrile, polymethylmethacrylate, acrylonitrile butadiene rubber (NBR), polybutadiene rubber (BR), styrene-butadiene rubber (SBR), etc. In one embodiment, a PVDF-based binder may be used as the cathode binder.

The conductive material may be added to enhance the conductivity and/or mobility of lithium ions or electrons of the cathode active material layer 230. For example, the conductive material may include carbon-based conductive materials such as graphite, carbon black, acetylene black, Ketjen black, graphene, carbon nanotubes, vapor-grown carbon fibers (VGCFs), carbon fibers, and/or metal-based conductive materials, including perovskite materials, such as tin, tin oxide, titanium oxide, $LaSrCoO_3$, and $LaSrMnO_3$, but is not limited thereto.

The cathode active material layer 230 may further include a thickener and/or a dispersant. In one embodiment, the cathode active material layer 230 may include a thickener such as carboxymethyl cellulose (CMC).

The anode 260 may include an anode current collector 255 and an anode active material layer 250 disposed on at least one surface of the anode current collector 255.

The anode current collector 255 may include, for example, a copper foil, a nickel foil, a stainless steel foil, a titanium foil, a nickel foam, a copper foam, a polymer substrate coated with a conductive metal and the like. The anode current collector 255 may have a thickness of, for example, 10 $\mu$m to 50 $\mu$m, but is not limited thereto.

The anode active material layer 250 may include an anode active material. A material capable of intercalating and deintercalating lithium ions may be used as the anode active material. For example, the anode active material may include carbon-based materials such as crystalline carbon, amorphous carbon, carbon composites, or carbon fibers, etc.; lithium metal; a lithium alloy; a silicon (Si)-containing material or a tin (Sn)-containing material, etc.

Examples of the amorphous carbon may include hard carbon, soft carbon, coke, mesocarbon microbead (MCMB), mesophase pitch-based carbon fiber (MPCF) or the like.

Examples of the crystalline carbon may include graphite-based carbons such as natural graphite, artificial graphite, graphitized coke, graphitized MCMB, and graphitized MPCF, etc.

The lithium metal may include pure lithium metal or lithium metal having a protective layer formed thereon for suppressing dendrite growth, etc. In one embodiment, a lithium metalcontaining layer deposited or coated on the anode current collector may be used as the anode active material layer 250. In one embodiment, a lithium thin-film layer may be used as the anode active material layer 250.

Elements included in the lithium alloy may include aluminum, zinc, bismuth, cadmium, antimony, silicon, lead, tin, gallium, indium, etc.

The silicon-containing material may provide more enhanced capacity characteristics. The silicon-containing material may include Si, $SiO_x$ ($0<x<2$), metal-doped $SiO_x$ ($0<x<2$), a silicon-carbon composite, etc. The metal may include lithium and/or magnesium, and the metal-doped $SiO_x$ ($0<x<2$) may include a metal silicate.

For example, an anode slurry may be prepared by mixing the anode active material in a solvent. The anode slurry may be coated/deposited to the anode current collector 255, then dried and roll-pressed to prepare the anode active material layer 250. The coating process may be performed using substantially the same method as the method of preparing the cathode active material layer 230. The anode active material layer 250 may further include a binder, and optionally may further include the electrolyte, a conductive material, a thickener, etc.

In some embodiments, the anode may include the anode active material layer 250 in the form of a lithium metal formed through a deposition/coating process.

The solvent for the anode active material layer may include, for example, water, pure water, deionized water, distilled water, ethanol, isopropanol, methanol, acetone, n-propanol, t-butanol, etc.

In one embodiment, the electrolyte included in the anode active material layer 250 may be the above-described electrolyte for a secondary battery. In one embodiment, the electrolyte included in the anode active material layer 250 may be the above-described inorganic electrolyte. For example, the secondary battery may be provided as an all-solid-state battery including the above-described electrolyte or inorganic electrolyte.

The above-described materials that can be used when fabricating the cathode as the binder, conductive material and thickener may also be used.

In some embodiments, a styrene-butadiene rubber (SBR)-based binder, carboxymethyl cellulose, polyacrylic acid-based binder, poly(3,4-ethylenedioxythiophene (PEDOT)-based binder, and the like may be used as an anode binder.

FIG. 3 is a schematic view illustrating the structure of an electrolyte layer for a secondary battery according to exemplary embodiments.

Referring to FIG. 3, the electrolyte layer 210 may include the above-described electrolyte 100. For example, the electrolyte layer 210 may include the flame retardant compound 110 included in the electrolyte 100. For example, the electrolyte layer 210 may include a membrane formed by impregnating a separation membrane with the above-described mixture and curing the same. The electrolyte layer 210 may be a separation membrane including an electrolyte.

According to exemplary embodiments, the electrolyte layer 210 may be interposed between the cathode 240 and the anode 260. The electrolyte layer 210 may be a solid electrolyte layer 210. For example, the solid electrolyte layer 210 may be a gel-polymer electrolyte layer 210 including the above-described electrolyte.

According to exemplary embodiments, an electrode cell 200 is defined by the cathode 240, the anode 260, and the electrolyte layer 210, and a plurality of electrode cells 200 may be stacked to form an electrode assembly. For example, the electrode assembly may be formed by winding, stacking, folding, or the like.

For example, electrode tabs (cathode tabs and anode tabs) may protrude from the cathode current collector 235 and the anode current collector 255, respectively, and may extend to one side of a case. The electrode tabs may be fused together with the one side of the case and connected to electrode leads (a cathode lead and an anode lead) that extend or are exposed to the outside of the case.

For example, a pouch-type case, a prismatic case, a cylindrical case, or a coin-type case, etc. may be used as the case.

Hereinafter, embodiments of the present disclosure will be further described with reference to specific experimental examples. However, the examples and comparative examples included in the experimental examples are provided merely for illustrative purposes of the present disclosure and are not intended to limit the scope of the appended claims. It will be apparent to those skilled in the art that various changes and modifications can be made within the scope and spirit of the present disclosure, and such changes and modifications are to be regarded as falling within the scope of the appended claims.

**Preparative Example** 1: **Preparation of a monomer represented by Formula 1-1**

[Reaction Scheme 1]

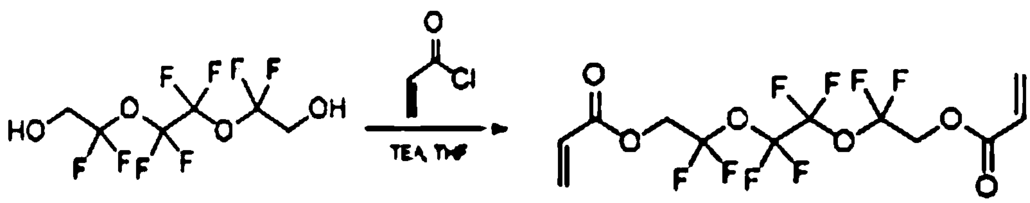


100 mL of tetrahydrofuran (THF), perfluoro-3,6-dioxaoctan-1,8-diol (10 g, 34.0 mmol), and triethylamine (7.91 g, 78.2 mmol) were introduced into a 1 L round-bottom flask, and the mixture was cooled to 0 °C using a reactor. After cooling, acryloyl chloride (6.31 g, 69.7 mmol) was added over 1 hour, and the mixture was stirred at room temperature (25 °C) for 18 hours. After the reaction was completed, triethylamine hydrochloride (TEA-HCl) salt was removed through a filtration device. Tetrahydrofuran (THF) was removed by distillation under reduced pressure to replace the solvent, and then 100 mL of dichloromethane was added as the replacement solvent. After replacing the solvent, the mixture was washed once each with 0.1 N HCl aqueous solution, $NaHCO_3$ aqueous solution, and ultra-pure water (UPW), and then dried under reduced pressure to remove dichloromethane. Thereafter, the concentrated solution was purified by column chromatography using hexane and ethyl acetate as the mobile phase to obtain 9.6 g of the monomer represented by Formula 1-1 (yield: 70.2%).

The nuclear magnetic resonance (NMR) analysis results for the monomer obtained in Preparative Example 1 are as follows.

$^1H$-NMR (500 MHz, $CDCl_3$): 6.52-6.56 (d, 2H), 6.18-6.23 (m, 2H), 5.98-6.00 (d, 2H), 4.55-4.59 (t, 4H)

**Preparative Example 2: Preparation of a monomer represented by Formula 2-3**

[Reaction Scheme 2]

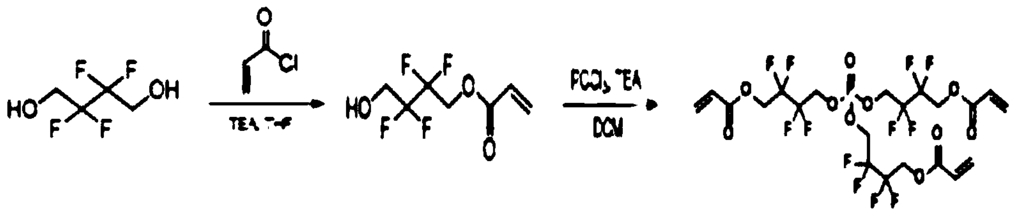

In Preparative Example 1, tetrafluoro-1,4-butanediol (10 g, 61.70 mmol) and triethylamine (7.49 g, 74.04 mmol) were used instead of perfluoro-3,6-dioxaoctan-1,8-diol (10 g, 34.0 mmol) and triethylamine (7.91 g, 78.2 mmol), and after cooling, acryloyl chloride (5.08 g, 56.15 mmol) was used instead of acryloyl chloride (6.31 g, 69.7 mmol). Except for these changes, the same procedures as in Preparative Example 1 were performed to obtain 4.47 g of the intermediate (yield: 36.9%).

50 mL of dichloromethane, triethylamine (2.16 g, 21.34 mmol), $POCl_3$ (0.99 g, 6.47 mmol), and the prepared intermediate were added to a 1 L round-bottom flask, and the mixture was cooled to 0 °C using a reactor and then stirred for 24 hours. After stirring, the mixture was washed once each with 0.1 N HCl aqueous solution, $NaHCO_3$ aqueous solution, and ultra-pure water (UPW), and then dried under reduced pressure to remove dichloromethane. Thereafter, the concentrated solution was purified by column chromatography using hexane and ethyl acetate as the mobile phase to obtain 3.12 g of the monomer represented by Formula 2-3 (final yield: 25.8%).

The nuclear magnetic resonance (NMR) analysis results for the monomer obtained in Preparative Example 2 are as follows.

$^1$H-NMR (500 MHz, $CDCl_3$): 6.51-6.55 (m, 3H), 6.17-6.23 (m, 3H), 5.97-6.00 (m, 3H), 4.63-4.68 (q, 6H), 4.52-4.59 (m, 6H)

## Example 1

### (1) Preparation of mixture

A mixture was prepared by mixing an electrolyte monomer, in which the monomer represented by Formula 1-1 below and the monomer represented by Formula 2-3 below were mixed in a 1:1 weight ratio, with a 1.0 M $LiPF_6$ solution including a mixed solvent of EC/EMC/FLE03 (fluorine-containing ether-based electrolyte solution) at a volume ratio of 25:25:50.

The content of the electrolyte monomer based on the total weight of the electrolyte for the secondary battery was 7.5 wt%.

[Formula 1-1]

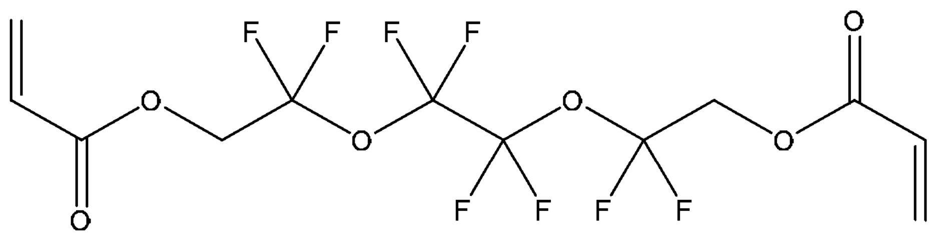

[Formula 2-3]

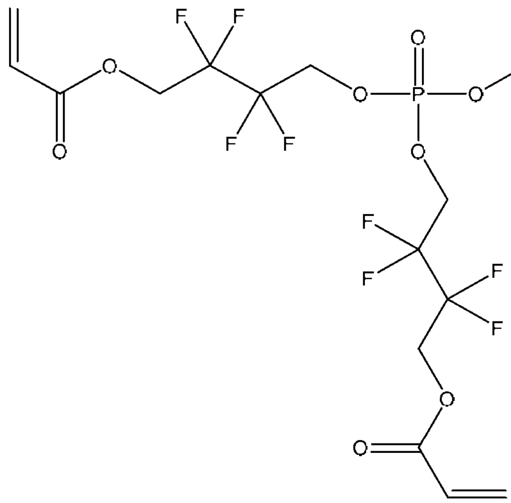

(2) Manufacture of lithium secondary battery

A cathode slurry was prepared by mixing $LiNi_{0.6}Co_{0.2}Mn_{0.2}O_2$ as a cathode active material, polyvinylidene fluoride (PVDF) as a binder, and carbon black as a conductive material in a weight ratio of 90:5:5. The cathode slurry was uniformly applied to aluminum foil, dried, roll-pressed, and then notched into a circular shape having a diameter of φ14 to fabricate a cathode.

An anode slurry was prepared by mixing natural graphite as an anode active material, SBR/CMC as a binder, and carbon black as a conductive material in a weight ratio of 96:3:1. The anode slurry was uniformly applied to Cu foil, dried, roll-pressed, and then notched into a circular shape having a diameter of φ16 to fabricate an anode.

Polyethylene (PE) was prepared as a separation membrane. The cathode and anode were placed so that they faced each other with the separation membrane interposed therebetween, and then compressed to form an electrode assembly. The electrode assembly was placed in a coin cell outer case having a diameter of 20 mm and a height of 1.6 mm, into which the mixture was injected and allowed to be impregnated for 12 hours. Thereafter, the electrode assembly was heat cured at 70°C for 1 hour to manufacture a coin cell secondary battery.

**Examples 2 to 10**

Lithium secondary batteries were manufactured in the same manner as in Example 1, except that the type and content of the electrolyte monomer, the type and content of the fluorine-containing ether solvent, and the content of the electrolyte monomer based on the total weight of the electrolyte were changed as shown in Table 1 below.

**Comparative Example 1**

A cathode slurry was prepared by mixing $LiNi_{0.6}Co_{0.2}Mn_{0.2}O_2$ as a cathode active material, polyvinylidene fluoride (PVDF) as a binder, carbon black as a conductive material, and LLZTO as a solid electrolyte in a weight ratio of 80:1.5:1.5: 17. The cathode slurry was uniformly applied an aluminum foil having a thickness of 12 μm, dried, roll-pressed, and then notched into a circular shape having a diameter of φ14 to fabricate a cathode.

An anode slurry was prepared by mixing natural graphite as an anode active material, SBR/CMC as a binder, and carbon black as a conductive material at a weight ratio of 96:3:1. The anode slurry was uniformly applied to a Cu foil having a thickness of 10 μm, dried, roll-pressed, and then notched into a circular shape having a diameter of φ16 to fabricate an anode.

A separation membrane was prepared by cutting polyethylene (PE) to a thickness of 20 μm and notching into a circular shape having a diameter of φ19. The cathode and anode were placed so that they faced each other with the separation membrane interposed therebetween, and the tab portions of the cathode and the tab portions of the anode were welded, respectively.

The welded cathode/separation membrane/anode assembly was placed in a coin cell case measuring 20 mm in diameter and 1.6 mm in height, and an electrolyte was injected and allowed to be impregnated for 12 hours to manufacture a coin cell secondary battery.

The electrolyte used herein was prepared by dissolving 1.0 M $LiPF_6$ in a mixed solvent of EC/EMC/DEC (25/45/30; volume ratio), and adding 5 wt% of fluorinated ethylene carbonate (FEC), 0.5 wt% of propane sulfone, and 0.5 wt% of ethylene sulfate (ESA).

## Comparative Examples 2 to 9

Lithium secondary batteries were manufactured in the same manner as in Example 1, except that the type and content of the electrolyte monomer, and the content of the electrolyte monomer based on the total weight of the electrolyte were changed as shown in Table 1 below.

[TABLE 1]

| | Type and content of electrolyte monomer (wt% based on the total monomer weight) | | | Type and content of ether-based electrolyte containing fluorine (wt% based on the total volume of mixed solvent) | | | | Content of electrolyte monomer (wt% based on the total monomer weight) |
|---|---|---|---|---|---|---|---|---|
| | A1 | A2 | A3 | FLE01 | FLE02 | FLE03 | FLE04 | |
| Example 1 | 50 | 50 | - | - | - | 50 | - | 7.5 |
| Example 2 | 30 | 70 | - | - | - | 50 | - | 7.5 |
| Example 3 | 70 | 30 | - | - | - | 50 | - | 7.5 |
| Example 4 | 50 | 50 | - | 39 | - | - | - | 7.5 |
| Example 5 | 50 | 50 | - | - | 50 | - | - | 7.5 |
| Example 6 | 50 | 50 | - | - | - | - | 31 | 7.5 |
| Example 7 | 50 | 50 | - | - | - | 20 | - | 7.5 |
| Example 8 | 50 | 50 | - | - | - | 60 | - | 7.5 |
| Example 9 | 50 | 50 | - | - | - | 50 | - | 3 |
| Example 10 | 50 | 50 | - | - | - | 50 | - | 15 |
| Comparative Example 1 | - | - | - | - | - | - | - | - |
| Comparative Example 2 | - | - | 100 | - | - | 50 | - | 5 |
| Comparative Example 3 | - | - | 100 | - | - | 50 | - | 7.5 |
| Comparative Example 4 | - | 50 | 50 | - | - | 50 | - | 5 |
| Comparative Example 5 | - | 50 | 50 | - | - | 50 | - | 7.5 |
| Comparative Example 6 | - | 100 | - | - | - | 50 | - | 5 |
| Comparative Example 7 | - | 100 | - | - | - | 50 | - | 7.5 |
| Comparative Example 8 | 50 | - | 50 | - | - | 50 | - | 5 |
| Comparative Example 9 | 50 | - | 50 | - | - | 50 | - | 7.5 |

The specific components described in Table 1 are as follows.

A1: Monomer represented by Formula 1-1 above
A2: Monomer represented by Formula 2-3 above
A3: Compound represented by Formula 5 below

[Formula 5]

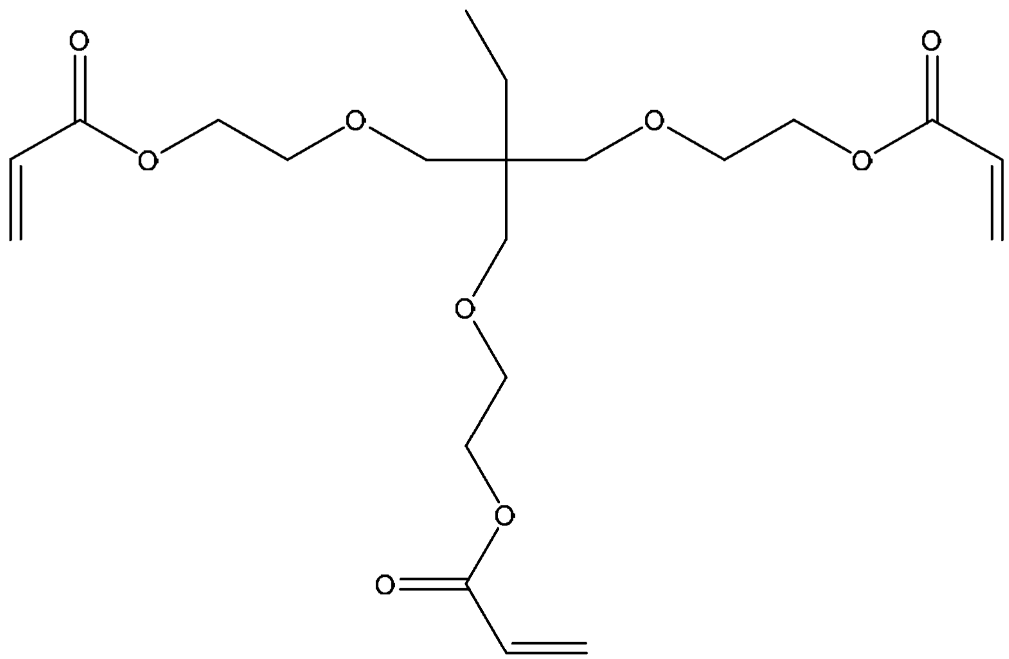

FLE01: 1, 1,2,2-tetrafluoroethyl-2,2,2-trifluoroethyl ether
FLE02: 1,1,2,2-tetrafluoroethyl-2,2,3,3-tetrafluoropropyl ether
FLE03: 2,2,3,3-tetrafluoro-1,4-dimethoxybutane (FDMB)
FLE04: 1,1,2,2,3,3,4,4-octafluoro-5-methoxy pentane

**Experimental Example 1: Evaluation of electrolyte**

**(1) Evaluation of self-extinguishing properties**

1) Examples 1 to 10 and Comparative Examples 2 to 9

Glass fiber was cut into a diameter of φ16, dried at 120 °C to prepare dried glass fiber, and the mass (g) of the dried glass fiber was measured.

A gasket and the dried glass fiber were sequentially placed into the bottom of a coin cell, followed by injection of 0.5 mL of the first mixed solution prepared according to the above-described examples and comparative examples (Comparative Examples 2 to 9). Thereafter, the spacer and cap were sequentially placed to assemble the coin cell.

Thereafter, the dried glass fiber was added and impregnated with the first mixed solution, then cured for 1 hour at 70 °C. Subsequently, the coin cell was disassembled to prepare a sample (a sample in which the dried glass fiber impregnated with the first mixed solution was cured), and the mass (g) of the sample was measured.

After igniting the sample, the time until the fire went out (extinguishing time) was measured.

The self-extinguishing time was calculated according to Equation 1 below.

[Equation 1]

$$\text{Self} - \text{extinguishing time (s/g)} = \frac{\text{Extinguishing time (s)}}{\text{Sample mass (g)} - \text{Dried glass fiber mass (g)}}$$

2) Comparative Example 1

Glass fiber was cut into a diameter of φ16, dried at 120 °C to prepare dried glass fiber.

3 ml of the electrolyte according to the above-described Comparative Example 1 was placed into a sealed container, and the mass (g) of the electrolyte was measured.

Thereafter, the dried glass fiber was placed into the sealed container and impregnated with the electrolyte to prepare a sample. The sample was then taken out, and the mass (g) of the residual electrolyte that was not impregnated was measured.

After igniting the sample, the time until the fire went out (extinguishing time) was measured.

The self-extinguishing time was calculated according to Equation 2 below.

[Equation 2]

$$\text{Self} - \text{extinguishing time (s/g)} = \frac{\text{Extinguishing time (s)}}{\text{Electrolyte mass (g)} - \text{Residual electrolyte mass (g)}}$$

The results of the self-extinguishing time calculation are shown in Table 2 below.

[TABLE 2]

| Classification | Self-extinguishing time (s/g) |
|---|---|
| Example 1 | 48.27 |
| Example 2 | 50.23 |
| Example 3 | 51.40 |
| Example 4 | 50.30 |
| Example 5 | 49.35 |
| Example 6 | 50.66 |
| Example 7 | 50.81 |
| Example 8 | 49.11 |
| Example 9 | 52.51 |
| Example 10 | 40.45 |
| Comparative Example 1 | 112.02 |
| Comparative Example 2 | 65.03 |
| Comparative Example 3 | 65.39 |
| Comparative Example 4 | 56.33 |

(continued)

| Classification | Self-extinguishing time (s/g) |
|---|---|
| Comparative Example 5 | 58.97 |
| Comparative Example 6 | 82.34 |
| Comparative Example 7 | 76.25 |
| Comparative Example 8 | 58.14 |
| Comparative Example 9 | 51.04 |

Referring to Table 2, in the examples where the monomers represented by Formulas 1-1 and 2-1 were used together as electrolyte monomers, the self-extinguishing time was 51 s/g or less.

In Comparative Example 1, which used only a separation membrane without using an electrolyte monomer, the self-extinguishing time exceeded 100 s/g.

In Comparative Examples 2 to 9, where the monomers represented by Formulas 1-1 and 2-1 were not used together as electrolyte monomers, or where other compounds were used as electrolyte monomers, the self-extinguishing time was 51 s/g or more.

## Experimental Example 2: Evaluation of lithium secondary battery

### (1) Evaluation of cycle life characteristics

50 cycles of constant-current (CC) discharging at a rate of 0.5 C (2.7V cut-off) were performed on the lithium secondary batteries according to the above-described examples and comparative examples at 25 °C. The discharge capacity was measured and expressed as a percentage (%) of the initial discharge capacity, and the resulting value was used to evaluate the cycle life characteristics.

The evaluation results are shown in Table 3.

### (2) Evaluation of DSC

For the lithium secondary batteries manufactured according to the above-described examples and comparative examples, the onset temperature of the exothermic reaction and the exothermic heat were measured using differential scanning calorimetry (DSC).

The measured onset temperatures of the exothermic reaction and the exothermic heats are shown in Table 3.

[TABLE 3]

| Classification | Cycle life characteristics (%) | Onset temperature of exothermic reaction (°C) | Exothermic heat (J/g) |
|---|---|---|---|
| Example 1 | 93.9 | 203.41 | 55.26 |
| Example 2 | 91.5 | 202.37 | 76.48 |
| Example 3 | 91.3 | 202.83 | 77.79 |
| Example 4 | 96.5 | 201.76 | 71.69 |
| Example 5 | 95.2 | 202.70 | 24.21 |
| Example 6 | 95.9 | 202.65 | 66.17 |
| Example 7 | 97.0 | 202.88 | 57.32 |
| Example 8 | 96.8 | 203.01 | 56.08 |
| Example 9 | 98.0 | 201.09 | 58.35 |
| Example 10 | 94.0 | 204.42 | 24.79 |
| Comparative Example 1 | 98.1 | 195.12 | 108.28 |
| Comparative Example 2 | 92.3 | 195.74 | 107.84 |
| Comparative Example 3 | 91.1 | 198.29 | 92.64 |

(continued)

| Classification | Cycle life characteristics (%) | Onset temperature of exothermic reaction (°C) | Exothermic heat (J/g) |
|---|---|---|---|
| Comparative Example 4 | 92.1 | 196.03 | 105.99 |
| Comparative Example 5 | 91.0 | 198.57 | 87.51 |
| Comparative Example 6 | 91.4 | 196.92 | 92.64 |
| Comparative Example 7 | 90.2 | 200.96 | 79.39 |
| Comparative Example 8 | 91.6 | 196.73 | 92.91 |
| Comparative Example 9 | 90.7 | 199.81 | 84.29 |

FIG. 4 is a graph showing the DSC evaluation results of the lithium secondary batteries manufactured according to exemplary embodiments and comparative examples.

Referring to Table 3 and FIG. 4, in the examples using electrolyte layers including both the monomer represented by Formula 1-1 and the monomer represented by Formula 2-1 as monomers, the cycle life characteristics were 91% or more, the onset temperature of the exothermic reaction exceeded 201 °C, and the exothermic heat was less than 78 J/g.

In Comparative Example 1, in which a separation membrane was used without an electrolyte layer, the onset temperature of the exothermic reaction decreased and the exothermic heat increased.

In Comparative Examples 2 to 9, in which both the monomer represented by Formula 1-1 and the monomer represented by Formula 2-1 were not used together as monomers, the cycle life characteristics decreased, and both the onset temperature of the exothermic reaction and the exothermic heat increased.

## Claims

**1.** A monomer for an electrolyte comprising:

a first monomer represented by Formula 1; and
a second monomer represented by Formula 2:

[Formula 1]

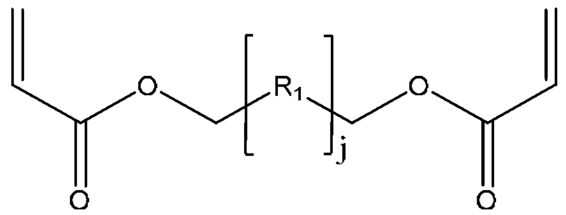

(in Formula 1, $R_1$ is a substituted or unsubstituted C2 to C12 alkylene group, or a substituted or unsubstituted C2 to C10 oxyalkylene group, and j is an integer from 1 to 5)

[Formula 2]

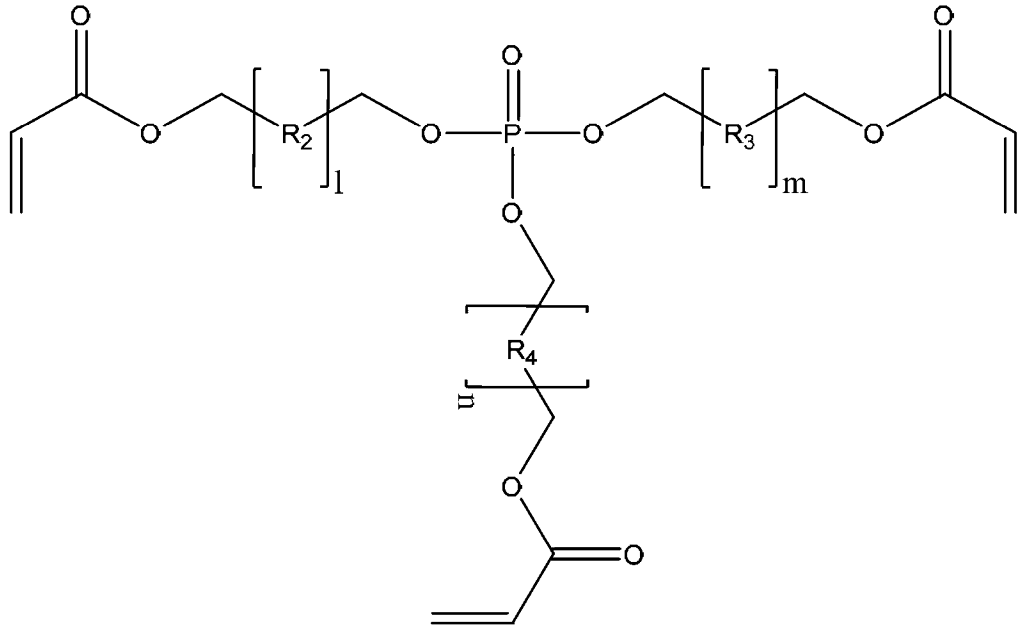

(in Formula 2, $R_2$, $R_3$ and $R_4$ are each independently a substituted or unsubstituted C2 to C10 alkylene group, or a substituted or unsubstituted C2 to C10 oxyalkylene group, and 1, m and n are each independently an integer from 0 to 5).

2. The monomer for an electrolyte according to claim 1, wherein the ratio of the content of the second monomer to the content of the first monomer is 0.5 to 2 based on weight.

3. The monomer for an electrolyte according to claim 1, wherein in Formula 1, $R_1$ is a fluorine-substituted C2 to C10 alkylene group, or a fluorine-substituted C2 to C10 oxyalkylene group, and
in Formula 2, l, m and n are each independently an integer from 0 to 3.

4. The monomer for an electrolyte according to claim 1, wherein in Formula 2, $R_2$, $R_3$ and $R_4$ are the same, and 1, m and n are the same integers.

5. The monomer for an electrolyte according to claim 1, wherein the first monomer comprises at least one of a monomer represented by Formula 1-1 and a monomer represented by Formula 1-2:

[Formula 1-1]

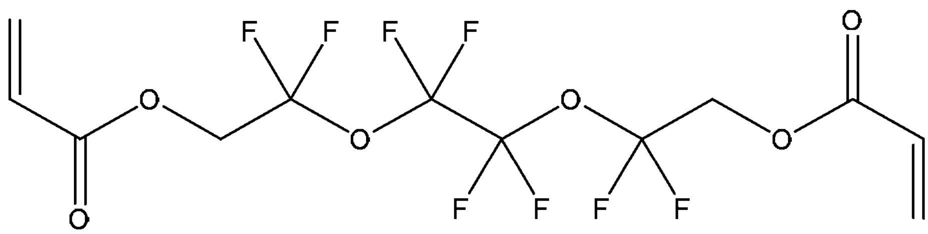

[Formula 1-2]

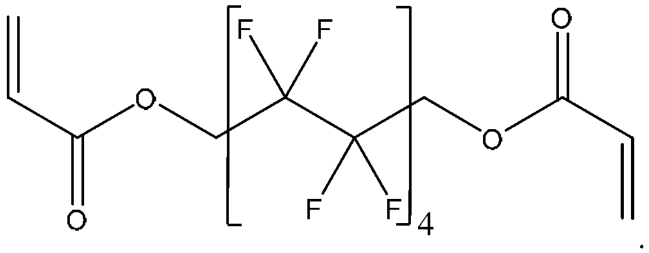

6. The monomer for an electrolyte according to claim 1, wherein the second monomer comprises at least one of a monomer represented by Formula 2-1 to a monomer represented by Formula 2-3:

[Formula 2-1]

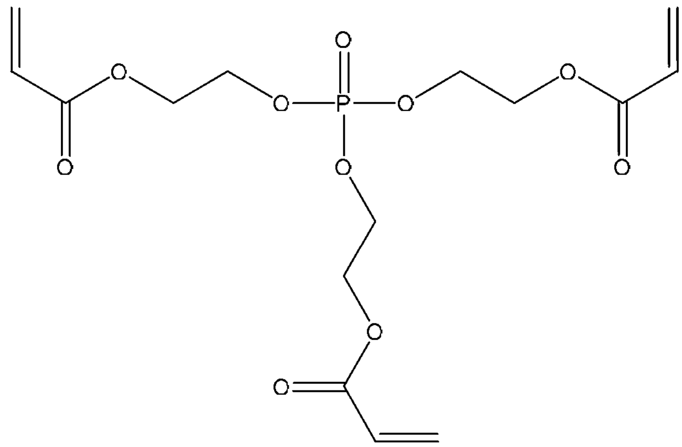

[Formula 2-2]

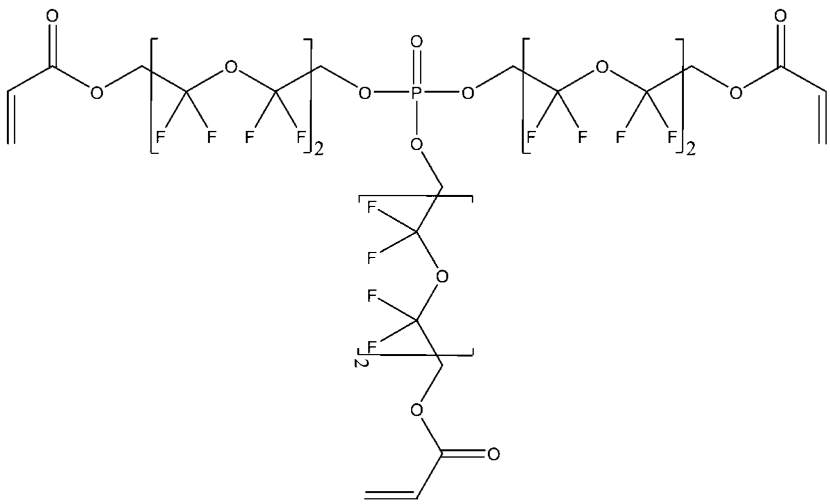

[Formula 2-3]

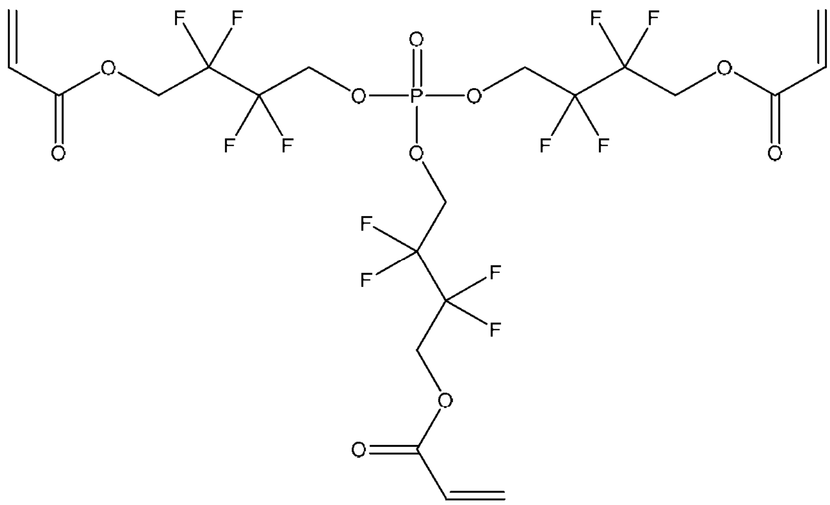

.

**7.** An electrolyte for a secondary battery comprising:

a flame retardant compound comprising a polymer derived from the monomer for an electrolyte according to claim 1; and
a lithium salt.

**8.** The electrolyte for a secondary battery according to claim 7, further comprising a composite electrolyte comprising an organic polymer and an inorganic electrolyte,
wherein the composite electrolyte has a film form.

**9.** The electrolyte for a secondary battery according to claim 8, wherein the inorganic electrolyte comprises an oxide-based solid electrolyte.

**10.** The electrolyte for a secondary battery according to claim 7, wherein the content of the flame retardant compound is 3% by weight to 20% by weight based on the total weight of the electrolyte for the secondary battery.

**11.** A lithium secondary battery comprising: a cathode;

an anode disposed to face the cathode; and
an electrolyte layer which is disposed between the cathode and the anode, and comprises the electrolyte for a secondary battery according to claim 7.

**12.** A method for manufacturing an electrolyte for a secondary battery, comprising:

preparing a mixture comprising the monomer for an electrolyte according to claim 1 and an electrolyte solution; and
curing the mixture.

**13.** The method for preparing an electrolyte for a secondary battery according to claim 12, wherein the mixture further comprises an organic polymer and an inorganic electrolyte.

**14.** The method for preparing an electrolyte for a secondary battery according to claim 12, wherein the content of the monomer for an electrolyte is 3% by weight to 20% by weight based on the total weight of the mixture.

**15.** The method for preparing an electrolyte for a secondary battery according to claim 12, wherein the electrolyte solution comprises an ether-based solvent containing fluorine (F).

**16.** The method for preparing an electrolyte for a secondary battery according to claim 15, wherein the content of the ether-based electrolyte solution containing fluorine (F) is 10% by volume to 60% by volume based on the total volume of the electrolyte solution.

**17.** The method for preparing an electrolyte for a secondary battery according to claim 12, wherein the mixture further comprises a thermal initiator, and
the step of curing the mixture comprises heat-treating the mixture.

**18.** The method for preparing an electrolyte for a secondary battery according to claim 12, wherein the mixture further comprises a photoinitiator, and
the step of curing the mixture comprises irradiating the mixture with light.

[FIG. 1]

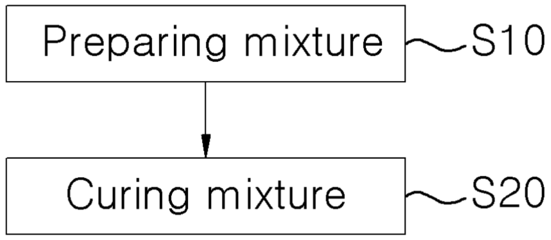


[FIG. 2]

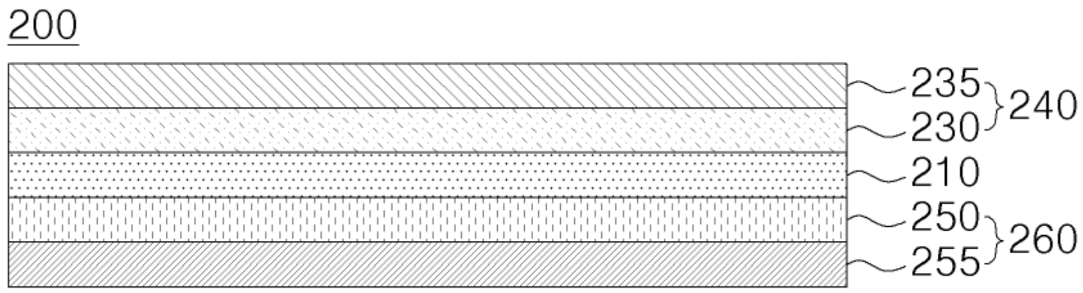


[FIG. 3]

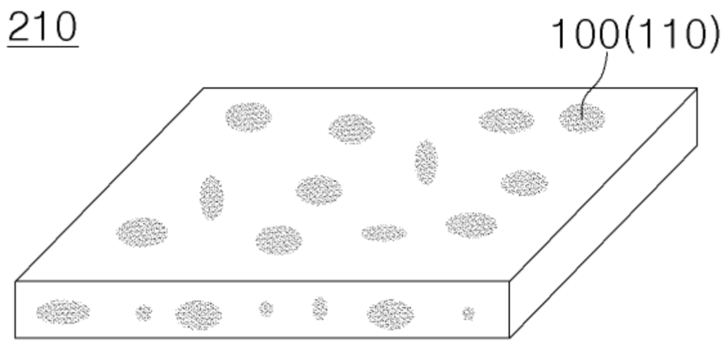

[FIG. 4]

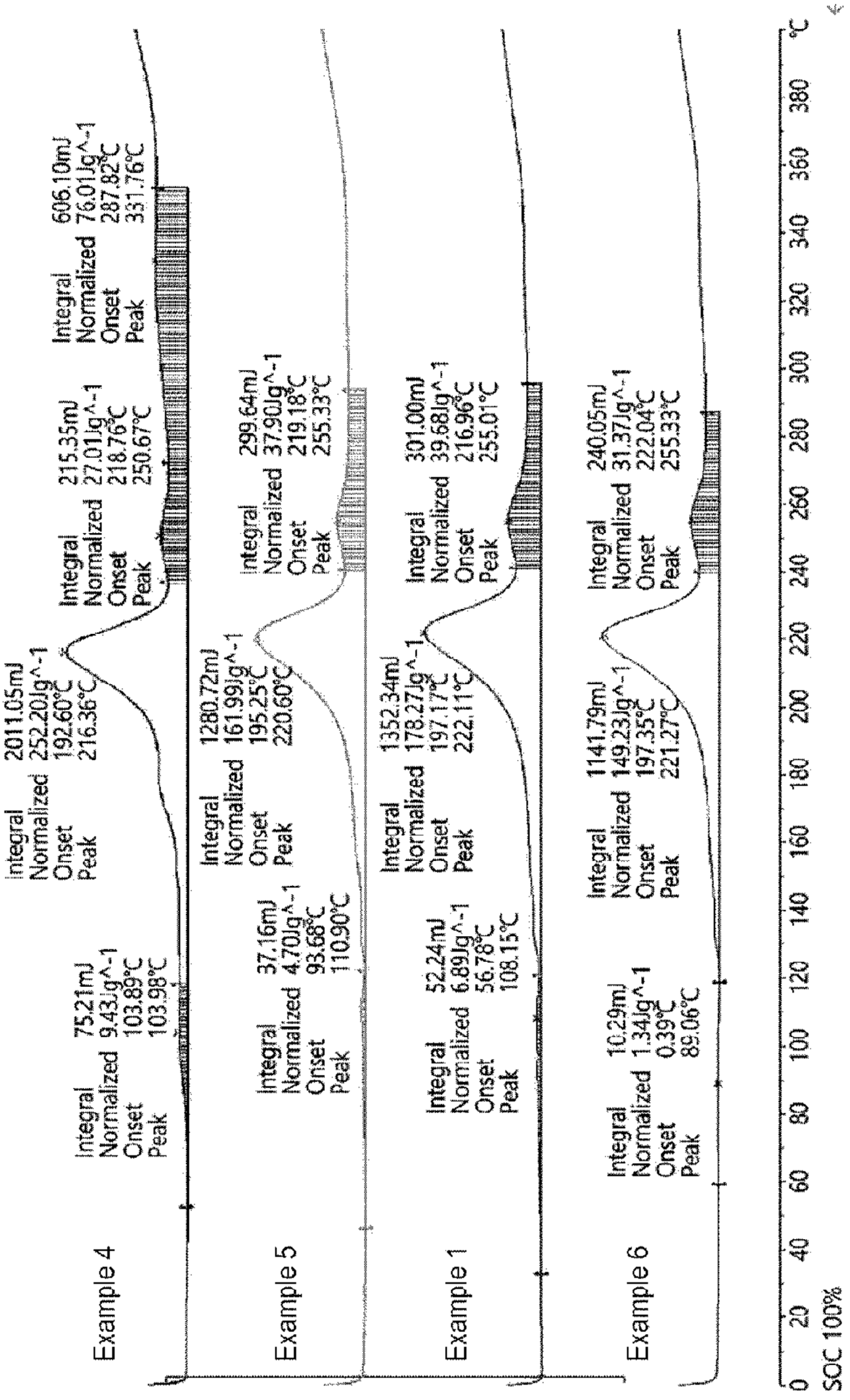
Example 4
Integral 75.21mJ
Normalized 9.43Jg^-1
Onset 103.89°C
Peak 103.98°C
Integral 2011.05mJ
Normalized 252.20Jg^-1
Onset 192.60°C
Peak 216.36°C
Integral 215.35mJ
Normalized 27.01Jg^-1
Onset 218.76°C
Peak 250.67°C
Integral 606.10mJ
Normalized 76.01Jg^-1
Onset 287.82°C
Peak 331.76°C
Example 5
Integral 37.16mJ
Normalized 4.70Jg^-1
Onset 93.68°C
Peak 110.90°C
Integral 1280.72mJ
Normalized 161.99Jg^-1
Onset 195.25°C
Peak 220.60°C
Integral 299.64mJ
Normalized 37.90Jg^-1
Onset 219.18°C
Peak 255.33°C
Example 1
Integral 52.24mJ
Normalized 6.89Jg^-1
Onset 56.78°C
Peak 108.15°C
Integral 1352.34mJ
Normalized 178.27Jg^-1
Onset 197.17°C
Peak 222.11°C
Integral 301.00mJ
Normalized 39.68Jg^-1
Onset 216.96°C
Peak 255.01°C
Example 6
Integral 10.29mJ
Normalized 1.34Jg^-1
Onset 0.39°C
Peak 89.06°C
Integral 1141.79mJ
Normalized 149.23Jg^-1
Onset 197.35°C
Peak 221.27°C
Integral 240.05mJ
Normalized 31.37Jg^-1
Onset 222.04°C
Peak 255.33°C
0 20 40 60 80 100 120 140 160 180 200 220 240 260 280 300 320 340 360 380 °C
SOC 100%

## INTERNATIONAL SEARCH REPORT

International application No. **PCT/KR2024/007150**

**A. CLASSIFICATION OF SUBJECT MATTER**

**H01M 10/0567**(2010.01)i; **H01M 10/0565**(2010.01)i; **H01M 10/0562**(2010.01)i; **H01M 10/052**(2010.01)i; **H01M 10/0569**(2010.01)i; **H01M 10/42**(2006.01)i

According to International Patent Classification (IPC) or to both national classification and IPC

**B. FIELDS SEARCHED**

Minimum documentation searched (classification system followed by classification symbols)

H01M 10/0567(2010.01); C07F 9/09(2006.01); C07F 9/6574(2006.01); H01M 10/05(2010.01); H01M 10/052(2010.01); H01M 10/056(2010.01); H01M 10/0565(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus) & keywords: 전해질(electrolyte), 모노머(monomer), 중합체(polymer), 난연성(flame retarding), 개시제(initiator), 복합 전해질 막(composite electrolyte film)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2015-0050508 A (LG CHEM, LTD.) 08 May 2015 (2015-05-08)<br>See claims 1, 8, 9, 15 and 17; paragraphs [0008], [0027], [0053], [0063], [0064], [0067], [0069], [0074]-[0076], [0081], [0083], [0084], [0088] and [0089]; and example 3. | 1-18 |
| Y | KR 10-2011-0010516 A (LG CHEM, LTD.) 01 February 2011 (2011-02-01)<br>See claims 2 and 7; paragraph [0039]; and example 1. | 1-18 |
| Y | KR 10-2016-0068464 A (SAMSUNG SDI CO., LTD. et al.) 15 June 2016 (2016-06-15)<br>See claims 4-7. | 8,9,13 |
| A | MU, X. et al. Phosphorus-fixed stable interfacial nonflammable gel polymer electrolyte for safe flexible lithium-ion batteries. Advanced functional materials. 2022, vol. 32, article no. 2203006, pp. 1-11.<br>See abstract; pages 1, 2 and 9; and figure 1. | 1-18 |
| A | CN 111499663 A (ZHENGZHOU UNIVERSITY) 07 August 2020 (2020-08-07)<br>See claims 1 and 3-9; and paragraphs [0019], [0022], [0032] and [0035]. | 1-18 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **02 September 2024** | **04 September 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2024/007150**

| Patent document cited in search report | Publication date (day/month/year) | Patent family member(s) | Publication date (day/month/year) |
|---|---|---|---|
| KR 10-2015-0050508 A | 08 May 2015 | BR 112015005331 A2 | 04 July 2017 |
| | | BR 112015005331 B1 | 10 August 2021 |
| | | BR 112015005331 B8 | 10 January 2023 |
| | | CN 104919638 A | 16 September 2015 |
| | | CN 104919638 B | 19 January 2018 |
| | | EP 2889946 A1 | 01 July 2015 |
| | | EP 2889946 B1 | 19 July 2017 |
| | | JP 2016-503572 A | 04 February 2016 |
| | | JP 6136034 B2 | 31 May 2017 |
| | | KR 10-1637090 B1 | 06 July 2016 |
| | | TW 201530849 A | 01 August 2015 |
| | | TW I559597 B | 21 November 2016 |
| | | US 10355309 B2 | 16 July 2019 |
| | | US 2016-0028111 A1 | 28 January 2016 |
| | | WO 2015-065101 A1 | 07 May 2015 |
| KR 10-2011-0010516 A | 01 February 2011 | KR 10-1350316 B1 | 16 January 2014 |
| KR 10-2016-0068464 A | 15 June 2016 | KR 10-2284480 B1 | 02 August 2021 |
| | | US 10637097 B2 | 28 April 2020 |
| | | US 2016-0164138 A1 | 09 June 2016 |
| CN 111499663 A | 07 August 2020 | CN 111499663 B | 09 September 2022 |

Form PCT/ISA/210 (patent family annex) (July 2022)